# EUROPEAN PATENT SPECIFICATION

(11) **EP 1 076 286 B1**
(45) Date of publication and mention of the grant of the patent: **13.02.2013**
(21) Application number: 00306769.1
(22) Date of filing: 09.08.2000
(51) Int. Cl.: G06F 9/44, G06F 9/42

(54) **Method and apparatus for constructing dispatch tables which enable transitive method override**
Verfahren und Gerät zur Herstellung von Dispatchtabellen die transitive Methodenbeseitigung erlauben
Méthode et dispositif pour construction des tables d'appel qui permettent le dépassage transitif des méthodes

(30) Priority: 13.08.1999 US 374879
(43) Date of publication of application: 14.02.2001
(73) Proprietor: Oracle America, Inc., Redwood City, CA 94065 (US)
(72) Inventor: Brachan, Gilad, Los Altos, California 94024 (US)
(74) Representative: Harris, Ian Richard

(56) References cited:
- EP-A- 1 049 009
- GILAD BRACHA: "The Programming Language Jigsaw: Mixins, Modularity and Multiple Inheritance" PHD THESIS, [Online] 1 March 1992 (1992-03-01), XP002305727 THE UNIVERSITY OF UTAH Retrieved from the Internet: URL:http://bracha.org/jigsaw.ps> [retrieved on 2004-11-10]
- JAN VITEK, R. NIGEL HORSPOOL: "Compact Dispatch Tables for Dynamically Typed Object Oriented Languages" PROCEEDINGS OF THE 6TH INTERNATIONAL CONFERENCE ON COMPILER CONSTRUCTION CC'96, SPRINGER-VERLAG, LNCS, [Online] vol. 1060, 1 April 1996 (1996-04-01), XP002305432 Retrieved from the Internet: URL:http://www.cs.uvic.ca/~nigelh/Publicat ions/cdt95.pdf> [retrieved on 2004-11-10]
- PER BOTHNER: "Java/C++ integration" CYGNUS SOLUTIONS, [Online] 1 November 1997 (1997-11-01), XP002305736 Retrieved from the Internet: URL:http://per.bothner.com/papers/native++ .html> [retrieved on 2004-11-10]
- KATHLEEN FISHER, JOHN REPPY: "The design of a class mechanism for MOBY" PROCEEDINGS OF THE ACM SIGPLAN 1999 CONFERENCE ON PROGRAMMING LANGUAGE DESIGN AND IMPLEMENTATION, [Online] 13 May 1999 (1999-05-13), pages 37-49, XP002305785 NEW YORK NY USA ISSN: 0362-1340 Retrieved from the Internet: URL:http://portal.acm.org/citation.cfm?id= 301638> [retrieved on 2004-11-10]
- ERIC DUJARDIN, ERIC AMIEL, ERIC SIMON: "Fast algorithms for compressed multimethod dispatch table generation" ACM TRANSACTIONS ON PROGRAMMING LANGUAGES AND SYSTEMS ACM USA, vol. 20, no. 1, 1 January 1998 (1998-01-01), pages 116-165, XP008038387 ISSN: 0164-0925
- WADE HOLST, DUANE SZAFRON: "Inheritance Management and Method Dispatch in Reflexive Object-Oriented Languages" UNIVERSITY OF ALBERTA, [Online] 27 December 1996 (1996-12-27), XP002305797 CANADA Retrieved from the Internet: URL:http://www.cs.ualberta.ca/research/tec hreports/1996/TR96-27.php> [retrieved on 2004-11-10]
- KAREL DRIESEN, URS HÖLZLE: "THE DIRECT COST OF VIRTUAL FUNCTION CALLS IN C++" ACM SIGPLAN NOTICES, ASSOCIATION FOR COMPUTING MACHINERY, NEW YORK, US, vol. 31, no. 10, 1 October 1996 (1996-10-01), pages 306-323, XP000639207 ISSN: 0362-1340
- STEPHAN DIEHL: "A FORMAL INTRODUCTION TO THE COMPILATION OF JAVA" SOFTWARE PRACTICE & EXPERIENCE, JOHN WILEY & SONS LTD. CHICHESTER, GB, vol. 28, no. 3, 1 March 1998 (1998-03-01), pages 297-327, XP000731738 ISSN: 0038-0644

## Description

### Background

This invention relates generally to computer systems and more particularly to a method and apparatus for constructing dispatch tables which enable transitive method override.

Inheritance is a major property of most object oriented programming systems. With inheritance, when a class is declared as a subclass of a superclass, that subclass automatically inherits all of the methods and attributes of the superclass. Thus, if class A has method M1 and attribute AT1, then class B, which is a subclass of class A, automatically inherits method M1 and attribute AT1. In addition to inheriting the methods and attributes of the superclass, the subclass may further comprise additional methods and attributes. Thus, for the example given above, class B may further comprise methods M2 and M3, and attributes AT2 and AT3.

In addition to inheriting and adding methods and attributes, some object oriented systems further allow subclasses to override the methods of the superclass. That is, the subclass is allowed to provide an implementation for an inherited method which is different from that provided by the superclass. This means that, for the example given above, subclass B may provide a different implementation for method M1 than that provided by superclass A. For example, the implementation for M1 provided by superclass A may draw a square whereas the implementation for method M1 provided by subclass B draws a circle. Thus, even though both methods have the same name, they may have different implementations. Which implementation is invoked depends upon the class of the object instance on which the method is invoked. If the method is invoked on a class A instance, then the implementation provided by class A will be invoked. If the method is invoked on a class B instance, then the implementation provided by class B will be invoked. Because there may be multiple implementations for any particular method, a determination will have to be made at runtime as to which implementation to invoke. The process of selecting which implementation to invoke at runtime is referred to as dynamic method dispatch.

In single inheritance systems where every subclass is able to access, and hence, override every method of a higher level class, the dynamic method dispatch process is relatively straightforward. However, some systems, such as the Java™ programming system manufactured by Sun Microsystems, Inc. of Mountain View, California, implement constructs known as "modularity constructs" which make it possible for a developer to restrict the accessibility of certain methods of certain classes to other classes. In the face of these accessibility restrictions, dynamic method dispatch is made much more complicated.

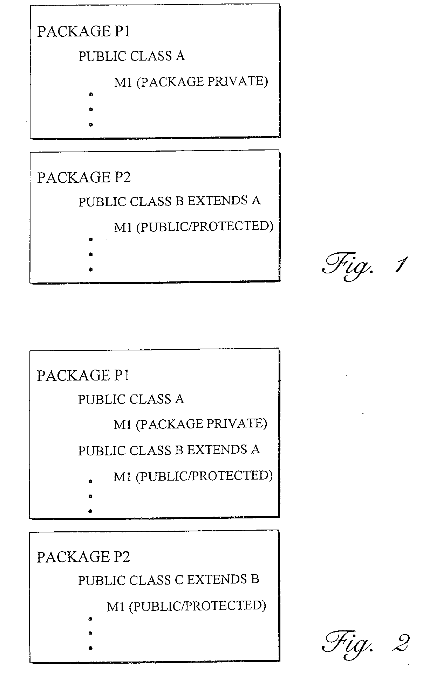

To elaborate, a modularity construct, sometimes referred to as a "package" in Java™, provides a mechanism for grouping or encapsulating selected classes. The package construct makes it possible to limit access to the classes within a package by classes in other packages. More specifically, each method of each class within a package may be declared as "public", "protected", or "package private". If a method is declared public or protected (denoted as public/protected hereinafter), then it may be accessed, and hence overridden, by any subclass of that class. On the other hand, if a method is declared package private, then that method may be accessed and overridden by a subclass if and only if that subclass is within the same package. Subclasses outside the package may not access or override the method. Fig. 1 illustrates an example of such a situation. In Fig. 1, there is shown two packages, P1 and P2. Package P1 contains a class A having a package private method M1. Package P2 contains a class B which extends A (meaning that B is a subclass of A) having a public/protected method M1. Because method M1 of class A is declared package private, and because class B is not in the same package as class A, class B will not be able to access or to override the method M1 of class A. Note that the package construct does not prevent class B from being a subclass of A, and hence, inheriting all of the attributes and methods of class A. The package only prevents class B from overriding the method M1 of class A. To enforce package constraints, it is a general rule that unless a subclass is within the same package as a higher level class that it wishes to override, it cannot override a package private method of the higher level class.

While on the surface, this general rule appears to effectively enforce the accessibility constraints imposed by modularity constructs, it can lead to some undesirable results, one of which is that of non-transitive method override. To illustrate how this non-transitive result can arise, suppose that a structure such as that shown in Fig. 2 is created, wherein there are two packages, P1 and P2. In package P1, there is a class A having a package private method M1. In the same package, there is a subclass B which extends A, having a public/protected method M1. In package P2, there is a subclass C which extends B, and which has a public/protected method M1. With such a structure, it is clear that method M1 of subclass B can access and hence override method M 1 of class A (since B is in the same package as A). It is also clear that method M1 of class C can override the method M1 of class B (since method M1 of B is declared to be public/protected). According to the transitive property, if method M1 of C can override method M1 ofB, and method M1 of can override method M1 of A, then method M1 of C should be able to override method M1 of A. This is not the result in this example, however, because under the rule set forth above, M1 of C cannot override M1 of A because M1 of A is package private and C is not in the same package as A. Thus, as this example shows, strict adherence to this rule can lead to non-transitive results. Because this is a somewhat non-intuitive result, and because transitive method override is a desirable property, there is a need for an improved dynamic method dispatch mechanism which is both capable of enforcing the accessibility constraints of modular constructs and providing transitive method override.

European Patent application EP-1,049,009-A2, published on 2 November 2000 and claiming a priority date of 26 April 1999 forms part of the state of the art by virtue of Article 54(3) EPC. EP-1,049,009-A2 describes an apparatus and computer program products for constructing dispatch tables. In one example a decision to allocate a new dispatch table entry is sensitive to the accessibility of a class. A dispatch table and dispatch table construction process is described in which the entries for a Vtable are determined such that conflicts between accessibility and class hierarchy are avoided. In particular, a dispatch table and dispatch table construct process is described which takes a method's accessibility and package status into consideration in determining the proper overriding semantics in table building techniques. The dispatch table may have more than one distinct entry for a method.

### Summary of the Invention

The invention is defined in the accompanying claims.

An embodiment of the invention provides a mechanism for constructing dispatch tables which may be used to perform dynamic method dispatch in a single inheritance system. As constructed, the dispatch tables enforce accessibility constraints imposed by modularity constructs while at the same time enabling transitive method override. According to one embodiment, a dispatch table for a class C (wherein C is within a package P and is a subclass of superclass S) is constructed as follows. First, the dispatch table for S is copied and is used as the starting point for the dispatch table of C. Then, for each locally declared method m in C, the following is performed.

The method m is checked to determine whether it has been marked as public/protected. If so, then the S dispatch table is checked for one or more public/protected entries corresponding to a method having the same name as method m. If one or more such entries is found, then for each such entry, the corresponding entry in the C dispatch table is overridden, and the index of the overridden entry is associated with method m. Otherwise, a new entry is allocated in the C dispatch table and is marked public/protected. Then, the index of the new entry is associated with method m. In addition, the S dispatch table is checked for one or more package private (private to package P) entries corresponding to a method having the same name as method m. If one or more such entries is found, then for each such entry, the corresponding entry in the C dispatch table is overridden and is marked public/protected.

If, on the other hand, the method m is marked as package private, then the S dispatch table is checked for one or more package private entries (private to package P) corresponding to a method having the same name as method m. If one or more such entries is found, then for each such entry, the corresponding entry in the C dispatch table is overridden, and the index of the overridden entry is associated with method m. Otherwise, a new entry is allocated in the C dispatch table and is marked package private. Then, the index of the new entry is associated with method m. In addition, the S dispatch table is checked for one or more public/protected entries corresponding to a method having the same name as method m. If one or more such entries is found, then for each such entry, the corresponding entry in the C dispatch table is overridden. However, that entry's public/protected marking is maintained.

The above method is repeated for each method m of class C. Once all methods of class C have been processed, the dispatch table for class C will have been fully constructed. Constructed in the manner described, the dispatch table will support transitive method override.

### Brief Description of the Drawings

Fig. 1 is a diagram of two classes within two packages to illustrate the accessibility constraints that may be imposed by modularity constructs.
Fig. 2 is a diagram of three classes within two packages to illustrate how enforcement of modularity constraints may cause method override to be non-transitive.
Fig. 3 shows a sample method table and dispatch table for a class A comprising a method M1.
Fig. 4 shows sample method tables and dispatch tables for a superclass S and a subclass C to illustrate the process of constructing a dispatch table for subclass C in accordance with the present invention.
Figs. 5a and 5b are flow diagrams for a first embodiment of the present invention.
Fig. 6 shows sample dispatch tables constructed in accordance with the present invention for the classes shown in Fig. 2.
Figs. 7a-7b are flow diagrams for an alternate embodiment of the present invention.
Fig. 8 is a hardware block diagram of a computer system in which an embodiment of the present invention may be implemented.

### Detailed Description of the Embodiment(s)

Before describing exemplary embodiments of the invention in detail, a short discussion of dispatch tables will be provided in order to facilitate a complete understanding thereof. In a system in which dispatch tables are used to perform dynamic method dispatch, there is associated with each class a method table and a dispatch table. The method table sets forth all of the methods associated with the class, while the dispatch table contains pointers to the sets of code that implement the methods. The method table is used to construct the dispatch table, and once constructed, the dispatch table is used at runtime to perform dynamic method dispatch. The purpose of the dispatch table is to increase system efficiency at runtime.

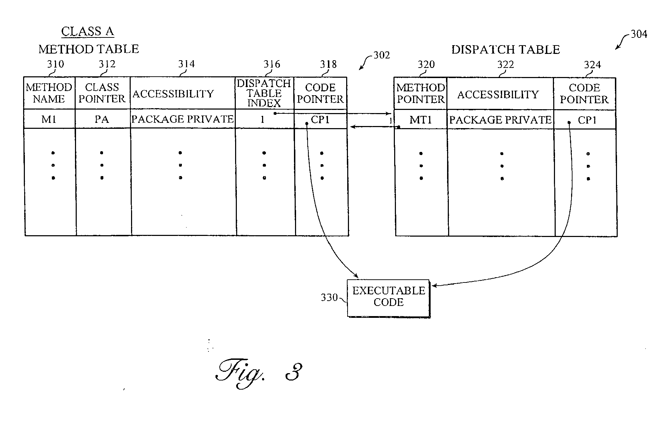

With reference to Fig. 3, there is shown a sample method table 302 and dispatch table 304 for a class A comprising a method M1. As shown, the method table 302 comprises five columns. The method name column 310 stores the name of the method. The class pointer column 312 stores a pointer which points back to the class definition. This pointer is useful for going back to the class definition to ascertain more information regarding the class. The accessibility column 314 stores the accessibility code (e.g. public, protected, package private) associated with the method. The dispatch table index column 316 stores the index of the entry in the dispatch table which is associated with a particular method, and the code pointer column 318 stores a pointer to a set of executable code which implements the method. For each method in class A, there is an associated entry in the method table 302. In the current example, class A has a method M1. Thus, there is an entry in the method table 302 having M1 in the name column 310. This entry has a class pointer PA which points back to the class definition for class A, and a package private accessibility code, indicating that the method M1 is package private. The entry further has a dispatch table index of I, indicating that the entry in the dispatch table 304 which is associated with method M1 is the first entry. The entry further has a code pointer CP1 which points to a set of executable code 330 which implements method M1.

The dispatch table 304 comprises three columns. The method pointer column 320 stores a pointer back to the entry in the method table 302 with which an entry in the dispatch table is associated. This pointer enables navigation back and forth between the tables. The accessibility column 322 stores an accessibility code (e.g. public; protected, package private) associated with the dispatch table entry, and the code pointer column 324 stores a pointer to a set of executable code. There is at least one entry in the dispatch table 304 for each entry in the method table 302. In the current example, there is an entry in the method table 302 for method M1; thus, there is a corresponding entry in the dispatch table 304. This dispatch table entry has a pointer MTI which points back to the corresponding entry in the method table. The dispatch table entry further has a package private code stored in the accessibility column 322. In addition, the dispatch table entry has a code pointer CP1 which points to the set of executable code 330. With the dispatch table 304 set up in the manner shown, it is code 330 that will be executed when method M1 is invoked on an instance of class A. Once a dispatch table 304 is constructed, it may be used at runtime to perform dynamic method dispatch to execute the proper set of code in response to a method invocation. To perform dynamic method dispatch, it is not necessary to reference the method table 302. This optimizes the efficiency of the dispatch process.

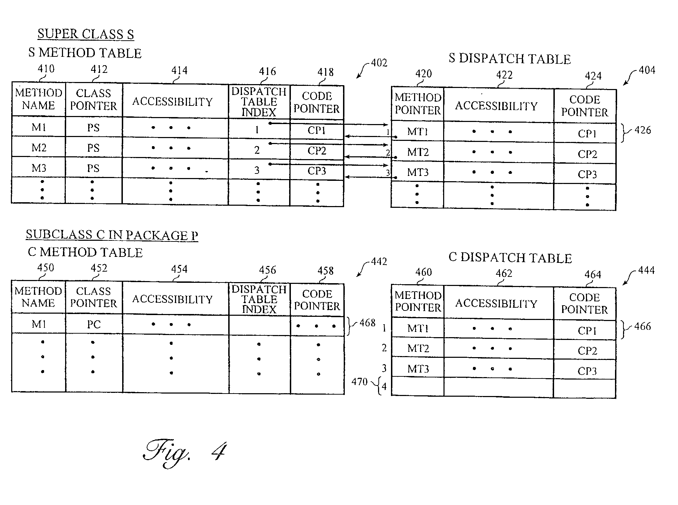

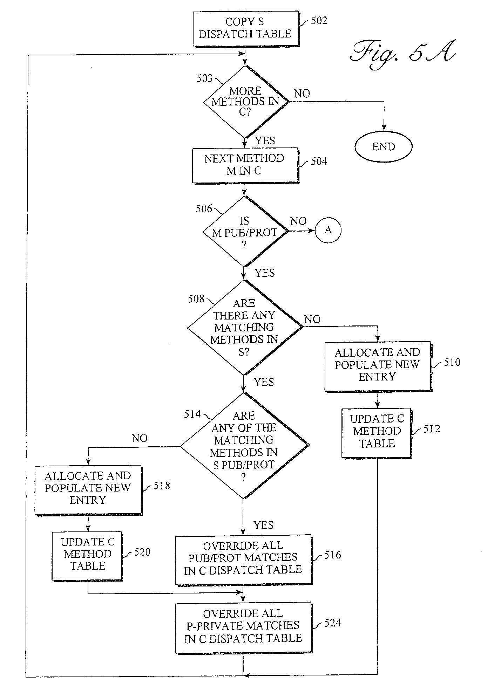

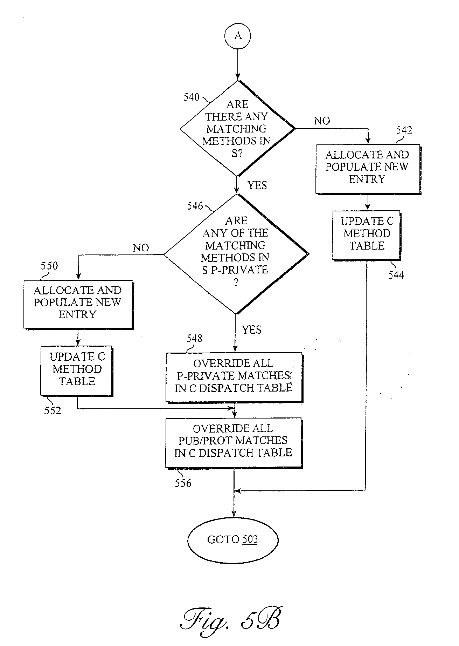

With this background information in mind, the dispatch table construction method of exemplary embodiments of the invention will now be described. The following description is based upon the following assumptions: (1) the dispatch table being constructed is for a class C; (2) C has an associated preconstructed method table having stored therein an entry for each method m in C; (3) C is a part of package P; (4) C is a subclass of superclass S; and (5) S has a preconstructed method table and dispatch table associated therewith. To facilitate discussion of the embodiments, reference will be made to Figs. 4, 5a, and 5b. Fig. 4 shows sample method and dispatch tables for superclass S and subclass C as the dispatch table construction process begins. Figs. 5a and 5b are the flow diagrams for a first embodiment of the method of the present invention.

As shown in Fig. 5a, construction of the C dispatch table 444 begins with copying (502) the S dispatch table 404 and using that as a starting point for the C dispatch table 444. This is shown in Fig. 4, wherein dispatch table 444 is depicted as being identical to dispatch table 404. Once that is done, a determination (503) is made as to whether there are any more methods in the C method table 442. If not, then it means that all of the methods of C have been processed, in which case, the dispatch table construction process is terminated. However, if there are more methods in the C method table 442, then the next entry 468 in the method table 442 corresponding to the next method m is selected (504). At this point, it should be noted that "m", as used in the following discussion, is not the specific name of a method, but rather is used as a variable to refer to any method entry in the C method table 442.

Once the next method m entry 468 is selected, the following procedure is performed. This procedure is performed for each method m in the C method table 442. Initially, the selected entry 468 is checked (506) to determine whether it has been marked in the accessibility column 454 as being public/protected. If it has not, then the method proceeds to entry point A (shown in Fig. 5b), which will be discussed in a later section. On the other hand, if the entry has been marked as public/protected, then a check is made to determine (508) whether there are any entries in the S dispatch table 404 which correspond to a method of S having the same name as method m. This may be done by following each pointer in the method pointer column 420 of S dispatch table 404 back to the S method table 402, and determining whether the name in the method name column 410 matches the name of the method m.

If no such entry is found, then a new entry 470 is allocated (510) in the C dispatch table 444, and the new entry 470 is populated (510). Specifically, the new entry 470 is populated by: (1) marking the accessibility column 462 of the entry 470 with public/protected; (2) storing a pointer in the method pointer column 460 of the entry 470 which points to the method m entry 468 of the C method table; and (3) storing the code pointer found in the code pointer column 458 of the method m entry 468 of the C method table 442 into the code pointer column 464 of the new entry 470. Once that is done, the C method table 442 is updated (512). Table 442 is updated by writing the index of the newly allocated entry 470 into the dispatch table index column 456 of the method m entry 468. In the example shown in Fig. 4, the index of the new entry is "4"; thus, "4" will be written into column 456 of entry 468. The process then loops back to (503) to process another method m.

Returning to (508), if one or more entries (referred to herein as matching entries) is found in the S dispatch table 404 which corresponds to a method of S having the same name as method m, then a determination (514) is made as to whether any of the matching entries is marked public/protected in the accessibility column 422 of the S dispatch table 404. If none of the matching entries is marked public/protected, then a new entry 470 is allocated (518) in the C dispatch table 444, and the new entry 470 is populated (518). The new entry 470 is populated by: (1) marking the accessibility column 462 of the entry 470 with public/protected; (2) storing a pointer in the method pointer column 460 of the entry 470 which points to the method m entry 468 of the C method table; and (3) storing the code pointer found in the code pointer column 458 of the method m entry 468 of the C method table 442 into the code pointer column 464 of the new entry 470. Once that is done, the C method table 442 is updated (520). Table 442 is updated by writing the index of the newly allocated entry 470 into the dispatch table index column 456 of the method m entry 468. In the example shown in Fig. 4, the index of the new entry is "4"; thus, "4" will be written into column 456 of entry 468. The process then proceeds to (524).

Returning to (514), if it is determined that one or more of the matching entries is marked public/protected, then for each matching entry in the S dispatch table 404 that is marked public/protected, a corresponding entry in the C dispatch table 444 is overridden (516). For the sake of illustration, suppose that entry 426 of the S dispatch table 404 is a matching entry that has been marked as public/protected. In such a case, the corresponding entry 466 in the C dispatch table 444 (the entry having the same index as entry 426) is overridden (516). The entry 466 is overridden by: (1) marking the accessibility column 462 of the entry 466 with public/protected; (2) storing into the method pointer column 460 of the entry 466 a pointer pointing to the method m entry 468 of the C method table; and (3) storing into the code pointer column 464 of the entry 466 the code pointer found in the code pointer column 458 of the method m entry 468. In addition, the method m entry 468 in the C method table 442 is updated. This entry 468 is updated by writing the index of the newly overridden entry 466 into the dispatch table index column 456 of the method m entry 468. In the example shown in Fig. 4, the index of the overridden entry is "1"; thus, "1" will be written into column 456 of entry 468. The corresponding entry 466 in the C dispatch table 444 is thus overridden. The overriding process described above is performed for each matching entry marked as public/protected.

Thereafter, the process proceeds to (524) to override all matching entries that have been marked as private to package P (the package to which class C belongs). That is, for each matching entry in the S dispatch table 404 that is marked private to package P (if any), a corresponding entry in the C dispatch table 444 is overridden (524). To determine whether a matching entry in the S dispatch table 404 is private to package P, the accessibility column 422 of the matching entry is first checked to see if the entry has been marked package private. If not, then the entry cannot be private to package P. However, if the entry is marked package private, then the method pointer in the method pointer column 420 of the entry is followed to an entry in the S method table 402. From there, the class pointer PS can be obtained from the class pointer column 412. Using this pointer, the class definition for class S can be reached, and from the class definition, it can be ascertained whether class S is part of package P. If class S is part of package P, then the matching entry is private to package P.

If one or more matching entries in the S dispatch table 404 is found to be private to package P (i.e. is P-private), then for each P-private matching entry, a corresponding entry in the C dispatch table 444 is overridden (524). For the sake of illustration, suppose that entry 426 of the S dispatch table 404 is a matching entry that has been determined to be P-private. In such a case, the corresponding entry 466 in the C dispatch table 444 (the entry having the same index as entry 426) is overridden (524). The entry 466 is overridden by: (1) marking the accessibility column 462 of the entry 466 with public/protected; (2) storing into the method pointer column 460 of the entry 466 a pointer pointing to the method m entry 468 of the C method table; and (3) storing into the code pointer column 464 of the entry 466 the code pointer found in the code pointer column 458 of the method m entry 468. This overriding process is performed for each P-private matching entry.

Once all P-private matching entries have been overridden (524), the process loops back to process another method m in the C method table 442. This loop continues until all of the methods of the C method table 442 have been processed, at which point, the C dispatch table 444 is fully constructed, and the construction process is terminated.

Returning to (506), if the method m entry 468 in the C method table 442 is not marked as public/protected (thereby meaning that method m is private to package P), then the method of the present invention branches to entry point A (shown in Fig. 5b). After the branch occurs, a check is made to determine (540) whether there are any entries in the S dispatch table 404 which correspond to a method of S having the same name as method m. This may be done by following each pointer in the method pointer column 420 of S dispatch table 404 back to the S method table 402, and determining whether the name in the method name column 410 matches the name of the method m.

If no such entry is found, then a new entry 470 is allocated (542) in the C dispatch table 444, and the new entry 470 is populated (542). Specifically, the new entry 470 is populated by: (1) marking the accessibility column 462 of the entry 470 with package private; (2) storing a pointer in the method pointer column 460 of the entry 470 which points to the method m entry 468 of the C method table; and (3) storing the code pointer found in the code pointer column 458 of the method m entry 468 of the C method table 442 into the code pointer column 464 of the new entry 470. Once that is done, the C method table 442 is updated (544). Table 442 is updated by writing the index of the newly allocated entry 470 into the dispatch table index column 456 of the method m entry 468. In the example shown in Fig. 4, the index of the new entry is "4"; thus, "4" will be written into column 456 of entry 468. The process then loops back to (503) to process another method m.

Returning to (540), if one or more entries (referred to below as matching entries) is found in the S dispatch table 404 which corresponds to a method of S having the same name as method m, then a determination (546) is made as to whether any of the matching entries is private to package P. To determine whether a matching entry in the S dispatch table 404 is private to package P, the accessibility column 422 of the matching entry is checked to see if the entry has been marked package private. If not, then the entry cannot be private to package P. However, if the entry is marked package private, then the method pointer in the method pointer column 420 of the entry is followed to an entry in the S method table 402. From there, the class pointer PS can be obtained from the class pointer column 412. Using this pointer, the class definition for class S can be reached, and from the class definition, it can be ascertained whether class S is part of package P. If class S is part of package P, then the matching entry is private to package P.

If none of the matching entries is private to package P (i.e. P-private), then a new entry 470 is allocated (550) in the C dispatch table 444, and the new entry 470 is populated (550). The new entry 470 is populated by: (1) marking the accessibility column 462 of the entry 470 with package private; (2) storing a pointer in the method pointer column 460 of the entry 470 which points to the method m entry 468 of the C method table; and (3) storing the code pointer found in the code pointer column 458 of the method m entry 468 of the C method table 442 into the code pointer column 464 of the new entry 470. The C method table 442 is then updated by writing the index of the newly allocated entry 470 into the dispatch table index column 456 of the method m entry 468. In the example shown in Fig. 4, the index of the new entry is "4"; thus, "4" will be written into column 456 of entry 468. The process thereafter proceeds to (556).

Returning to (546), if it is determined that one or more of the matching entries is P-private, then for each P-private entry, a corresponding entry in the C dispatch table 444 is overridden (548). For the sake of illustration, suppose that entry 426 of the S dispatch table 404 is a P-private matching entry. In such a case, the corresponding entry 466 in the C dispatch table (the entry having the same index as entry 426) is overridden (548). The entry 466 is overridden by: (1) maintaining the accessibility column 462 of the entry 466 as package private; (2) storing into the method pointer column 460 of the entry 466 a pointer pointing to the method m entry 468 of the C method table; and (3) storing into the code pointer column 464 of the entry 466 the code pointer found in the code pointer column 458 of the method m entry 468. In addition, the method m entry 468 in the C method table 442 is updated. This entry 468 is updated by writing the index of the newly overridden entry 466 into the dispatch table index column 456 of the method m entry 468. In the example shown in Fig. 4, the index of the overridden entry is "1"; thus, "1" will be written into column 456 of entry 468. The corresponding entry 466 of the C dispatch table 444 is thus overridden. This overriding process is performed for each P-private matching entry.

Thereafter, the process proceeds to (556) to override all matching entries that have been marked as public/protected. That is, for each matching entry in the S dispatch table 404 that is marked public/protected (if any), a corresponding entry in the C dispatch table 444 is overridden (556). To determine whether a matching entry in the S dispatch table 404 is public/protected, the accessibility column 422 of the entry is checked for a public/protected marking.

If one or more matching entries in the S dispatch table 404 is determined to be public/protected, then for each public/protected matching entry, a corresponding entry in the C dispatch table 444 is overridden (556). For the sake of illustration, suppose that entry 426 of the S dispatch table 404 is a matching entry that has been marked public/protected. In such a case, the corresponding entry 466 in the C dispatch table 444 (the entry with the same index as entry 426) is overridden (556). The entry 466 is overridden by: (1) maintaining the accessibility column 462 of the entry 466 as public/protected; (2) storing into the method pointer column 460 of the entry 466 a pointer pointing to the method m entry 468 of the C method table; and (3) storing into the code pointer column 464 of the entry 466 the code pointer found in the code pointer column 458 of the method m entry 468. This overriding process is performed for each matching entry that is marked public/protected.

Once all public/protected matching entries have been overridden (556), the process loops back to process another method m in the C method table 442. This loop continues until all of the methods of the C method table 442 have been processed. Once that is done, the C dispatch table 444 is fully constructed, and the construction process is terminated.

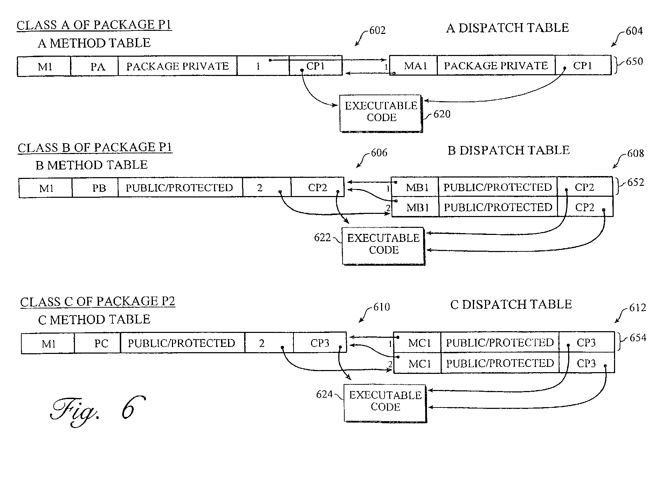

The method disclosed above produces dispatch tables which enable transitive method override. To illustrate that this is indeed the case, reference will be made to Fig. 6, wherein there is shown a plurality of dispatch tables 604, 608, 612 constructed in accordance with the method. The tables 602-612 of Fig. 6 correspond to the classes A, B, C of Fig. 2. Namely, the A dispatch table 604 is the dispatch table for class A in package P1. The B dispatch table 608 is the dispatch table for class B in package P1, and the C dispatch table 612 is the dispatch table for class C in package P2. The accessibility constraints imposed by the packages are built into the tables 604, 608, 612.

As shown in Fig. 6, there is an entry 650 in the A dispatch table 604 which corresponds to the method M1 in the A method table 602. This dispatch table entry 650 includes a package private marking (which it should since M1 of class A is package private, according to Fig. 2), and a code pointer CP1, which points to a set of executable code 620. Code 620 represents the implementation for method M1 provided by class A.

In the corresponding entry 652 (i.e. the entry having the same index) in the B dispatch table 608, note that the entry has been altered in two significant ways. First, there is a new pointer CP2 which points to a set of executable code 622 which is different from the code 620 provided by class A. By changing the pointer, class B is providing a different implementation for method M1 than that provided by class A. In effect, M1 of class B is overriding M1 of class A. This is the correct result because class B is in the same package as A, and hence, can access and override even package private methods of class A.

Second, note that the accessibility of the entry 652 has been changed from package private to public/protected. By doing so, the once package private method M1 of class A is made accessible and overridable to all subclasses of class B. It is this change that makes it possible to construct dispatch tables which enable transitive method override.

To continue with the example, in the corresponding entry 654 in the C dispatch table 612, note that a change has also been made. Specifically, there is a new pointer CP3 which points to a set of executable code 624 which is different from the code 620 provided by class A. By changing the pointer, class C is providing a different implementation for method M1 than that provided by class A. Thus, M1 of class C is overriding M1 of class A. This is the correct result under the transitive property. Since method M1 of C can override method M1 ofB, and method M1 of B can override method M1 of A, then method M1 of C can override method M1 of A. This is indeed the result achieved by an embodiment of the invention. Thus, as this example shows an embodiment of a method according to the present invention produces dispatch tables which enable transitive method override.

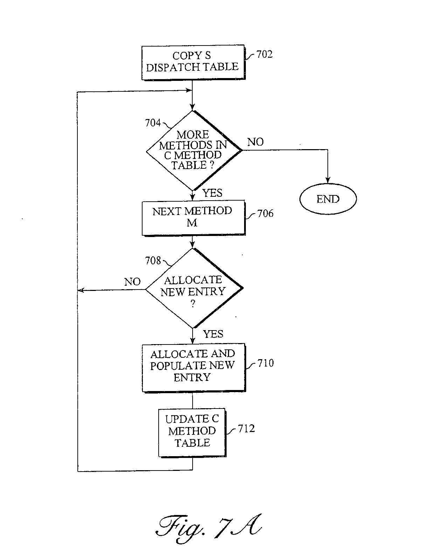

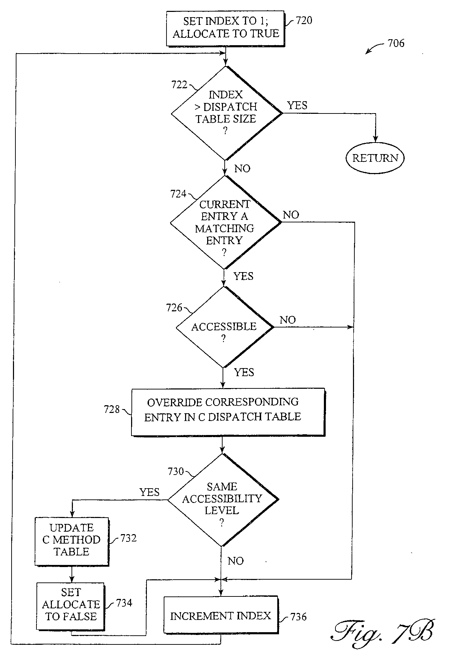

An alternative embodiment of the methodology of the present invention is shown in the flow diagrams of Figs. 7a and 7b. Like the first embodiment, this embodiment produces dispatch tables which enable transitive method override. However, the manner of producing the tables is slightly different. The form of the tables produced is also slightly different. Specifically, the dispatch tables generated in accordance with this embodiment do not comprise an accessibility column. Although the alternate dispatch tables do not include an accessibility column, the sample tables of Fig. 4 will still be useful in describing the invention. The accessibility columns 422, 462 will simply not be referenced. With reference to Figs. 4 and 7a-7b, the alternative embodiment will now be described.

As shown in Fig. 7a, the dispatch table construction process begins with copying (702) the S dispatch table 404 and using it as the starting point for the C dispatch table 444. Once the S dispatch table 404 is copied, a determination (704) is made as to whether there are more methods in the C method table 442. If not, then the process terminates. However, if there are more methods in the C method table 442, then the next method m (e.g. entry 468) is selected (706). Thereafter, a determination (708) is made as to whether a new entry should be allocated in the C dispatch table 444 for the method m. In this embodiment, part of the allocation determination involves possible override of some entries. This determination process (708), which involves looping through each entry in the S dispatch table, is shown in greater detail in Fig. 7b.

Initially, an index variable is set (720) to 1, and an allocation variable is set to "True". The index variable indicates which entry in the S dispatch table 404 is the current entry. Once these variables are initialized, a determination (722) is made as to whether the index variable has a value greater than the size of the S dispatch table 404. If so, then it means that all of the entries in the S dispatch table 404 have been processed, in which case, the process returns to (708) of Fig. 7a. On the other hand, if the current index value is not greater than the size of the S dispatch table 404, then a determination (724) is made as to whether the current entry is a matching entry for method m. That is, does the current entry of the S dispatch table 404 correspond to a method in the S method table 402 having the same name as method m? If not, then the process proceeds to (736). However, if the current entry is a matching entry, then a determination (726) is made as to whether the method in the S method table 402 associated with the current entry is accessible to class C. The method is accessible to class C if: (I) the method is declared public/protected; or (2) the method is package private and S is in the same package P as C; or (3) the method is package private and S is not in the same package as C BUT an intervening class which can access the method directly or indirectly has declared the method to be public/protected. If none of these criteria are met, then the process proceeds to (736). However, if even one of these criteria is met, then the entry in the C dispatch table 444 corresponding to the current entry is overridden (728). For example, if the current entry is entry 426, then the corresponding entry 466 (the entry with the same index) in the C dispatch table 444 is overridden. The entry 466 is overridden by: (1) storing into the method pointer column 460 of the entry 466 a pointer pointing to the method m entry 468 of the C method table; and (2) storing into the code pointer column 464 of the entry 466 the code pointer found in the code pointer column 458 of the method m entry 468.

Once the corresponding entry in the C dispatch table 444 is overridden, a determination (730) is made as to whether the method m and the method in the S method table 402 corresponding to the current entry have the same accessibility level. They have the same accessibility level if: (I) they are both public/protected; (2) they are both package private to P; or (3) method m is declared public/protected and the method in the S method table 402 corresponding to the current entry has been publicized. If any one of these criteria is met, then the C method table 442 is updated (732) by writing the index of the newly overridden entry 466 into the dispatch table index column 456 of the method m entry 468. In addition, the allocate variable is set to "False". The process then proceeds to (736).

Returning to (730), if method m and the method in the S method table 402 corresponding to the current entry do not have the same accessibility level, then the process proceeds to (736) to increment the index variable, and to loop back to (722) to process the next entry in the S dispatch table 404. This process continues until all of the entries in the S dispatch table 404 have been processed, at which time, the process returns to (708) of Fig. 7a.

Once (708) has been carried out, it is known from the value of the allocate variable whether a new entry needs to be allocated in the C dispatch table 444. If a new entry is not needed, then the process loops back to (704) to process another method m in the C method table 442. However, if a new entry is needed, then a new entry 470 is allocated and populated (710). The new entry 470 is populated by: (1) storing a pointer in the method pointer column 460 of the entry 470 which points to the method m entry 468 of the C method table; and (2) storing the code pointer found in the code pointer column 458 of the method m entry 468 of the C method table 442 into the code pointer column 464 of the new entry 470. Thereafter, the C method table 442 is updated (712) by writing the index of the newly allocated entry 470 into the dispatch table index column 456 of the method m entry 468. Once that is done, the current method m 468 is fully processed; thus, the process loops back to (704) to process the next method m. This process continues until all of the methods in the C method table 442 have been processed.

A sample set of source code written in the C++ programming language is provided in Appendix A. This source code provides one possible implementation for the alternate embodiment of the present invention.

### Hardware Overview

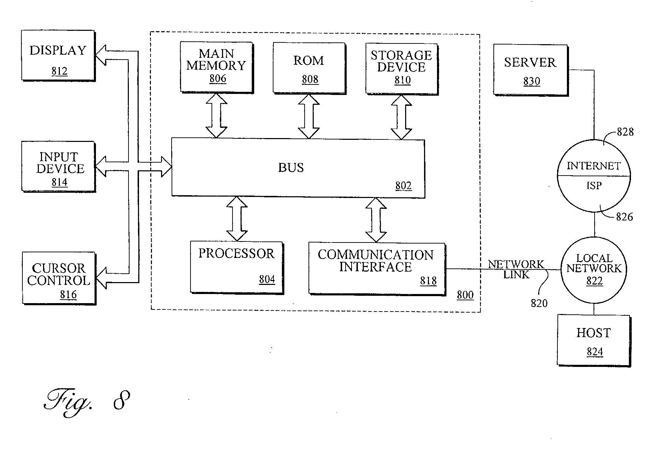

One embodiment of the present invention is implemented as a set of instructions executable by one or more processors. An embodiment of the invention may be implemented as part of any object oriented programming system, including but not limited to the Java™ programming system manufactured by Sun Microsystems, Inc. of Mountain View, California. Fig. 8 shows a hardware block diagram of a computer system 800 in which an embodiment of the invention may be implemented. Computer system 800 includes a bus 802 or other communication mechanism for communicating information, and a processor 804 coupled with bus 802 for processing information. Computer system 800 also includes a main memory 806, such as a random access memory (RAM) or other dynamic storage device, coupled to bus 802 for storing information and instructions to be executed by processor 804. In addition to being used to store the dispatch and method tables, main memory 806 may also be further used to store temporary variables or other intermediate information during execution of instructions by processor 804. Computer system 800 further includes a read only memory (ROM) 808 or other static storage device coupled to bus 802 for storing static information and instructions for processor 804. A storage device 810, such as a magnetic disk or optical disk, is provided and coupled to bus 802 for storing information and instructions.

Computer system 800 may be coupled via bus 802 to a display 812, such as a cathode ray tube (CRT), for displaying information to a computer user. An input device 814, including alphanumeric and other keys, is coupled to bus 802 for communicating information and command selections to processor 804. Another type of user input device is cursor control 816, such as a mouse, a trackball, or cursor direction keys for communicating direction information and command selections to processor 804 and for controlling cursor movement on display 812. This input device typically has two degrees of freedom in two axes, a first axis (e.g., x) and a second axis (e.g., y), that allows the device to specify positions in a plane.

According to one embodiment, the functionality of the present invention is provided by computer system 800 in response to processor 804 executing one or more sequences of one or more instructions contained in main memory 806. Such instructions may be read into main memory 806 from another computer-readable medium, such as storage device 810. Execution of the sequences of instructions contained in main memory 806 causes processor 804 to perform the process steps described herein. In alternative embodiments, hard-wired circuitry may be used in place of or in combination with software instructions to implement the invention. Thus, embodiments of the invention are not limited to any specific combination of hardware circuitry and software. For example, the functionality could be provided by a computer program comprising computer code on, for example, a carrier medium.

The terms "carrier medium" and "computer readable medium" are used synonymously herein to mean any medium that participates in providing instructions to processor 804 for execution. Such a medium may take many forms, including but not limited to, non-volatile media, volatile media, and transmission media. Non-volatile media includes, for example, optical or magnetic disks, such as storage device 810. Volatile media includes dynamic memory, such as main memory 806. Transmission media includes coaxial cables, copper wire and fiber optics, including the wires that comprise bus 802. Transmission media can also take the form of acoustic or electromagnetic waves, such as those generated during radio-wave, infra-red, and optical data communications.

Common forms of computer-readable media include, for example, a floppy disk, a flexible disk, hard disk, magnetic tape, or any other magnetic medium, a CD-ROM, any other optical medium, punchcards, papertape, any other physical medium with patterns of holes, a RAM, a PROM, and EPROM, a FLASH-EPROM, any other memory chip or cartridge, a carrier wave as described hereinafter, or any other medium from which a computer can read.

Various forms of computer readable media may be involved in carrying one or more sequences of one or more instructions to processor 804 for execution. For example, the instructions may initially be carried on a magnetic disk of a remote computer. The remote computer can load the instructions into its dynamic memory and send the instructions over a telephone line using a modem. A modem local to computer system 800 can receive the data on the telephone line and use an infra-red transmitter to convert the data to an infra-red signal. An infra-red detector can receive the data carried in the infra-red signal and appropriate circuitry can place the data on bus 802. Bus 802 carries the data to main memory 806, from which processor 804 retrieves and executes the instructions. The instructions received by main memory 806 may optionally be stored on storage device 10 either before or after execution by processor 804.

Computer system 800 also includes a communication interface 818 coupled to bus 802. Communication interface 818 provides a two-way data communication coupling to a network link 820 that is connected to a local network 822. For example, communication interface 818 may be an integrated services digital network (ISDN) card or a modem to provide a data communication connection to a corresponding type of telephone line. As another example, communication interface 818 may be a local area network (LAN) card to provide a data communication connection to a compatible LAN Wireless links may also be implemented. In any such implementation, communication interface 818 8 sends and receives electrical, electromagnetic or optical signals that carry digital data streams representing various types of information.

Network link 820 typically provides data communication through one or more networks to other data devices. For example, network link 820 may provide a connection through local network 822 to a host computer 824 or to data equipment operated by an Internet Service Provider (ISP) 826. ISP 826 in turn provides data communication services through the world wide packet data communication network now commonly referred to as the "Internet" 828. Local network 822 and Internet 828 both use electrical, electromagnetic or optical signals that carry digital data streams. The signals through the various networks and the signals on network link 820 and through communication interface 818, which carry the digital data to and from computer system 800, are exemplary forms of carrier waves transporting the information.

Computer system 100 can send messages and receive data, including program code, through the network(s), network link 820 and communication interface 818. In the Internet example, a server 830 might transmit a requested code for an application program through Internet 828, ISP 826. local network 822 and communication interface 818. The received code may be executed by processor 804 as it is received, and/or stored in storage device 810, or other non-volatile storage for later execution. In this manner, computer system 800 may obtain application code in the form of a carrier wave.

At this point, it should be noted that although the invention has been described with reference to specific embodiments, it should not be construed to be so limited. Various modifications may be made by those of ordinary skill in the art with the benefit of this disclosure without departing from the invention. Thus, the invention should not be limited by the specific embodiments used.

### APPENDIX A

```
 /*
 * @(#)klassVtable.cpp 1.100 99/07/30 19:21:10
 *
 * Copyright 1993-1999 by Sun Microsystems, Inc.,
 * 901 San Antonio Road, Palo Alto, California, 94303, U.S.A.
 * All rights reserved.
 *
 // CopyrightVersion 1.2
 #include "incls/_precompiled.incl"
 #include "incls/_klassVtable.cpp.incl"
 inline instanceKlass* klassVtable::ik() const {
 Klass* k =_klass()->klass_part();
 assert(k->oop_is_instance(), "not an instanceKlass");
 return (instanceKlass*)k;
 }
 inline bool needs_vtable_entry(methodHandle m, symbolHandle init, bool
 is_final_class) {
 if (RespectFinal && (is_final_class ∥ m->is_final())
 // (note: can't call m->is_final_method() because class may not exist yet -- called
 from loader)
 // ifm overrides a superclass method, we don't need a new vtable entry because it's
 there already;
 // ifm is newly introduced here, we also don't need one because it's called statically
 ∥ m_>is_static()
 // static methods don't need to be in vtable
 ∥ m->name() == init()
 // <init> is never called dynamically-bound
 ) {
 return false;
 }
 return true;
 }
 // this function computes the vtable size (including the size needed for miranda
 // methods) and the number of miranda methods in this class
 // Note on Miranda methods: Let's say there is a class C that implements
 // interface I. Let's say there is a method m in I that neither C nor any
 // of its super classes implement (i.e there is no method of any access, with
 // the same name and signature as m), then m is a Miranda method which is
 // entered as a public abstract method in C's vtable. From then on it should
 // treated as any other public method in C for method over-ride purposes.
 void klassVtable::compute_vtable_size_and_num_mirandas(int &vtable_length,
                                         int &num_miranda_methods,
                                        klassOop super,
                                        objArrayOop methods,
                                        AccessFlags class_flags,
                                        oop classloader,
                                        symbolOop classname,
                                        objArrayOop local_interfaces
                                        ){
                                        // set up default result values
                                        vtable_length = 0;
                                        num_miranda_methods = 0;
                                        // start off with super's vtable length
                                        instanceKlass* sk = (instanceKlass*)super->klass_part();
                                        vtable_length = super == NULL ? 0 : sk->vtable_length();
                                        // go thru each method in the
methods table to see if it needs a new entry
                                        int len = methods->length();
                                        for (int i = 0; i < len; i++) {
                                        assert(methods->obj_at(i)->is_m
ethod(), "must be a methodOop");
                                        methodOop m =
methodOop(methods->obj_at(i));
                                        if (needs_new_vtable_entry(m,
super, classloader, classname, class_flags))
 vtable_length += vtableentry::size(); // we need a new entry
 }
 // compute the number of mirandas methods that must be added to the end
 num_miranda_methods = get_num_mirandas(super, methods, local_interfaces);
 vtable_length += (num_miranda_methods * vtableEntry::size());
 if (Universe::is_bootstrapping() && vtable_length= 0) {
 // array classes don't have their superclass set correctly during
 // bootstrapping
 vtable_length = Universe::base_vtable_size();
 }
 assert(super != NULL ∥ vtable_length == Universe::base_vtable(size(),
  "bad vtable size for class Object");
  assert(vtable_length % vtableEntry::size() = 0, "bad vtable length");
  assert(vtable_length >= Universe:: base_vtable_size(), "vtable too small");
  }
  int klassVtabte::index_of(methodOop m, int len) const {
  #ifdef ASSERT
  if(!UseRevisedLookupSemantics) {
  int index = -1;
  for (int i = 0; i < len; i++) {
 methodOop m2 = table()[i].method;
 if (m2 = m) { index = i; break; }
 }
 // A method can potentially have 3 entries in the vtable. Assert
 // that we have found one of them
 int primary_index = m->vtable_index();
 int other_index1 = -1;
 int other_index2 = -1;
 if (m->has_other_vtable_index1() ∥ m->has_other_vtable_index2()) {
 ResourceMark rm;
 klass()->vtable()->compute_other_vtable_indices(other_index1, other_index2, m);
 }
 assert(((index == primary_index) ∥ (index == other_index1) ∥ (index ==
 other_index2)),
  "inconsistent vtable index");
  }
  #endif
  return m->vtable_index();
  }
  int klassVtable::index_of(symbolOop name, symbolOop signature, int len) const {
  // return vtable index of superclass method (if it exists), because the local
  // method may not have its index set yet (during initialize_vtable)
  KlassHandle super = klass()->super();
  methodOop m = super() ? super->lookup_method(name, signature) : NULL;
  if (m == NULL ∥ m->is_static()) {
  m = klass()->lookup_method(name, signature);
  assert(m != NULL, "should have found locally");
  }
  #ifdef ASSERT
  int index = -1;
  for (int i = 0; i < len; i++) {
  methodOop m2 = table()[i).method;
  assert(m2 !=NULL, "");
  if (m2->name() = name && m2->signature() = signature) { index = i; break; }
  }
  assert(index == m->vtable_index(), "inconsistent vtable index");
  #endif
  return m->vtabte_index();
  }
  int klassVtable::initialize_from_super(KlassHandle super) {
  if (super == NULL) {
  return 0;
  } else {
  // copy methods from superKlass
  // can't inherit from array class, so must be instanceKlass
  assert(super->oop_is_instance(), "must be instance klass");
  instanceKlass* sk = (instanceKlass*)super()->k)ass_part();
  klassVtable* supervtable = sk->vtable();
  assert(superVtable->length() <= _length, "vtable too short");
  #ifdef ASSERT
  superVtable->verify(std, true);
  #endif
 superVtable->copy_vtable_to(table());
 return superVtable->length();
 }
 }
 void klassVtable::initialize_vtable() {
 // Revised Vtable lookup
 if (UseRevisedLookupSemantics) {
 initialize_vtable2();
 return;
 }
 HandleMark hm; // (redundant with HandleMark below, but keep it just in case)
 if (Universe::is_bootstrapping()) {
 // just clear everything
 for (int i = 0; i < _length; i++) table()[i].clear();
 return;
 }
 KlassHandle super = klass()->super();
 int initialized = 0; // number of entries already initialized
 #ifdef ASSERT
 oop* end_of_obj = (oop*)_klass() + klass()->size();
 oop* end_of_vtable = (oop*)&table()[_length];
 assert(end_of_vtable <= end_of_obj, "vtable extends beyond end");
 #endif
 initialized = initialize_from_super(super);
 if (klass()->oop_is_array()) {
 assert(initialized == _length, "arrays shouldn't introduce new methods");
 } else {
 assert(_klass->oop_is_instance(), "must be instanceKlass");
 objArrayHandle methods = ik()->methods();
 symbolHandle init = = vmSymbols::object_initializer_name();
 int len = methods->length();
 const int num_super_methods = initialized;
 for (int i = 0; i < len; i++) {
 HandleMark hm;
 assert(methods->obj_at(i)->is_method(), "must be a methodOop");
 methodHandle m = methodOop(methods->obj_at(i));
 // we can skip methods that can be statically resolved
 if (!m->is_static() && (m->name() != init())) {
     int primary_index = -1;
     int other_index 1 = -1;
     int other_index2 = -1;
     // get all the entries where this method needs to be put
     compute_all_vtable_indices(primary_index, other_index1 other_index2, m());
     if (primary_index ==-1) {
      // new method; append at end, except if it is final
      // new final methods need not be added in the vtable as they
      // can never be overridden and can always be statically resolved.
      if (!(RespectFinal && (_klass->is_final() ∥ m->is_final()))) {
       put_method_at(m(), initialized);
       m->set_vtable_index(initialized); // set primary vtable index
       initialized++;
      }
     } else {
      // overrides existing superclass method; even final methods need
      // an entry because, they are overriding a non-final method
      assert(primary_index < initialized, "bad index");
      put_method_at(m(), primary_index);
      m->set_vtable_index(primary_index);
     }
    // other overrides
     if (other_index1 !=-1) {
      assert(other_index1 < initialized, "bad index");
      put_method_at(m(), other_index1);
      m->set_has_other_vtable_index1();
     }
    if(other_index2 !=-1) {
     assert(other_index2 < initialized, "bad index");
     put_method_at(m(), other_index2);
     m->set_has_other_vtable_index2();
    }
 }
 }
 // add miranda methods; it will also update the value of initialized
 fill_in_mirandas(initialized);
 assert(initialized == _length, "vtable initialization failed");
 #ifdef ASSERT
 verify(std, true);
 #endif
 }
 }
 // Revised lookup semantics.
 void klassVtable::initialize_vtable2() {
 KlassHandle super = klass()->super();
 int nofNewEntries = 0;
 if (PrintVtables && !klass()->oop_is_array()) {
 ResourceMark rm;
 std->print_cr("Initializing: %s", _klass->name()->as_C_string());
 }
 #ifdef ASSERT
 oop* end_of_obj = (oop*)_klass() + _klass()->size();
 oop* end_of_vtable = (oop*)&table()[_length];
 assert(end_of_vtable <= end_of_obj, "vtable extends beyond end");
 #endif
 if(Universe::is_bootstrapping()) {
 //just clear everything
 for (int i = 0; i < _length; i++) table()[i].clear();
 return;
 }
 int super_vtable_len = initialize_from_super(super);
 if (klass()->oop_is_array()) {
 assert(super_vtable_len =_length, "arrays shouldn't introduce new methods");
 } else {
 assert(_klass->oop_is_instance(), "must be instanceKlass");
 objArrayOop methods = ik()->methods();
 int len = methods->length();
 int initialized = super_vtable_len;
 for (int i = 0; i < len; i++) {
 HandleMark hm;
 assen(methods->obj_at(i)->is_method(), "must be a methodOop");
 methodOop m = (methodOop)methods->obj_at(i);
 bool needs_new_entry = update_super_vtable2(ik(), m, super_vtable_len);
 if(needs_new_entry) {
  put_method_at(m, initialized);
     m->set_vtable_index(initialized); // set primary vtable index
     initiaiized++;
 }
 }
 // add miranda methods; it will also update the value of initialized
 fill_in_mirandas(initialized);
 // In class hierachieswhere the accesibility is not increasing (i.e., going from private
 ->
 // package_private -> publicprotected), the vtable might actually be smaller than our
 initial
 // calculation.
 assert(initialized <= _length, "vtable initialization failed");
 for(;initialized < _length; initialized++) {
  put_method_at(NULL, initialized);
 }
 verify(std, true);
 }
 }
 // Interates through the vtables to find the broadest access level. This
 // will always be monotomic for valid Java programs - but not neccesarily
 // for incompatible class files.
 klassVtable::AccessType klassVtable::vtable_accessibility_at(int i) {
 // This vtable is not implementing the specific method
 if (i >= length()) return acc_private;
 // Compute AccessType for current method. public or protected we are done.
 methodOop m = method_at(i);
 if (m->is_protected() ∥ m->is_public()) return acc_publicprotected;
 AccessType acc = m->is_package_private() ? acc_package_private : acc_private;
 // Compute AccessType for method in super classes
 klassOop super = klass()->super();
 AccessType super_acc = (super != NULL) ? instanceKlass::cast(klass()->super())-
 >vtab)e()->vtable_accessibility_at(i)
                    : acc_private;
                    // Merge
                    return (AccessType)max((int)acc, (int)super_acc);
                    }
                    bool klassVtable::update_super_vtable2(instanceKlass* klass, methodOop
                    target_method, int super_vtable_len) {
                    ResourceMark rm;
                    bool allocate_new = true;
                    // Static and <init> methods are never in
                    if (target_method->is_static() ∥ target_method->name() =
                    vmsymbols::object_initializer_name()) {
                    return false;
                    }
                    if (RespectFinal && (klass->is final() ∥ target_method->is_final())) {
                    // a final method never needs a new entry; final methods can be statically
 // resolved and they have to be present in the vtable only if they override
 // a super's method, in which case they re-use its entry
 allocate_new = false;
 }
 // we need a new entry if there is no superclass
 if (klass->super() = NULL) {
 return allocate_new;
 }
 // private methods always have a new entry in the vtable
 if (targef_method->is_private()) {
 return allocate_new;
 }
 // search through the vtable and update overridden entries
 symbolOop name = target_method->name(),
 symbolOop signature = target_method->signature();
 for(int i = 0; i < super_vtable_len; i++) {
 methodOop match_method = method_at(i);
 // Check if method name matches
 if (match_method->name() == name && match_method->signature() = signature)
 {
 instanceKlass* holder=instanceKlass::cast(match_method->method_holder());
 // Check if the match_method is accessable from current class
 bool same_package_init = false;
 bool same_package_flag = false;
 bool simple_match = match_method->is_public() ∥ match_method-
 >is_protected();
 if(!simple_match) {
  same_package_init = true;
  same_package_flag holder->is_same_class_package(klass->class_loader(),
  klass->name());
  simple_match = match_method->is_package_private() && same_package_flag;
 }
 // A simple form of this statement is:
 // if( (match_method->is_public() ∥ match_method->isyrotected()) ∥
 // (match_method->is_package_private() && holder-
 >is_same class_package(klass->class_loader(), klass->name()))) {
 //
 // The complexity is introduced it avoid recomputing 'is_same_class_package'
 which is expensive.
 if (simple_match) {
 // Check if target_method and match_method has same level of accessibility. The
 accesibility of the
   // match method is the "most-general" visibility of all entries at it's particular
   vtable index for
   // all superclasses. This check must be done before we override the current entry
   in the vtable.
   AccessTypeat=vtable_accessibility_at(i);
   // Method is accessible, override with target method
   put_method_at(target_method, i);
   if ( (at == acc_publicprotected && (target_method->is_public() ∥
   target_method->is_protected())
    ∥ (at == acc_package_private && (target_method->is_package_private() &&
                      (( same_package_mit && same_package_flag) ∥
                      (!same_package_init && holder-
                      >is_same_class_package(klass->class_loader(), klass->name()))))))) {
   // target and match has same accessiblity - share entry
   allocate_new = false;
   target_method->set_vtahle_index(i);
  }
 }
 }
 return allocate_new;
 }
 void klassVtable::put_method_at(methodOop m, int index) {
 #ifndef PRODUCT
 if (PrintVtables && Verbose) {
 std->print_cr("adding %s::%s at index %d", _klass->internal_name(),
  (m != NULL) ? m->name()->as_C_string() : "<NULL>", index);
  }
  #endif
  table() [index]. set(m);
  }
  // Compute all the vtable indices for a method "target_method", declared locally
  // in a class with superclass "super", loader "classloader" and name "classname".
  // Let P be the package of the class. P can be determined using "classloader"
  // and "classname".
  //
  // In this scheme, each method depending on its access,
  // could potentially have 3 vtable entries:
  //
  // primary_index -
  // for public/protected methods : -1 (new entry needed) or primary_index of a
  // matching public/protected instance method
  // in any superclass
  // for package private methods : -1 (new entry needed) or primary_index of a
  // matching P private instance method in any
  // superclass.
  // for private methods : -1 (new entry needed)
  //
  // other_index 1 -
  // for public/protected methods : primary_index of a matching P private instance
  // method in any superclass
  // for package private methods : primary_index of a matching public/protected
  // instance method in any super class.
  // for private methods : primary_index of a matching public/protected
  // instance in any superclass
  //
  // other_index2 -
  // for public/protected methods : -1
  // for package private methods : -1
  // for private methods : primary_index of a matching P private instance
  // method in any superclass
  void klassVtable::compute_all_vtable_indices(int& primary_index,
                                  int& other_index1,
                                  int& other_index2,
                                  methodOop target_method,
                                  klassOop super,
                                  oop classloader,
                                  symbolOop classname
                                  ){
                                  assert(!UseRevisedLookupSemantics,
"not used for revised lookup");
                                  // set up default return values
                                  primary_index = -1;
                                  other_index1 = -1;
                                  other_index2 = -1;
                                  // if there is no super class, all
indices are -1, irrespective of the access
                                  if (super == NULL) {
 return;
 }
 int public_protected_index = -1;
 int P_private_index =-1;
 symbolOop name = target_method->name();
 symbolOop signature = target_method->signature();
 klassOop k=super;
 methodOop m = NULL;
 // lookup the super class hierarchy for a method with matching name & signature
 while ((k != NULL) && ((public_protected_index < 0) ∥ (P_private_index < 0))) {
 // note cannot update lookup cache here because we're holding the code cache lock
 // (which doesn't allow nested locks)
 m = MethodLookupCache::lookup_method_noupdate(k, name, signature);
 if (m = NULL) {
  break; // no match at all
 }
 // get the class holding the method
 instanceKlass *mk = instanceKlass::cast(m->method holder());
 if (!m->is_static()) {// we are interested only in instance methods
  if (public_protected_index < 0) {
     // we don't have a public/protected version yet
     if (m->is-public() ∥ m->is_protected()) {
      public_protected_index = m->vtable_index(); // found public/protected
      assert(public_protected_index >= 0, "just checking");
     }
  }
 if (P_private_index < 0) {
    // we don't have a P private version yet     if (m->is_package_private() &&
       mk->is_same_class_package(classloader, classname)) {
      P_private_index = m->vtable_index(); // found P private
      assert(P_private_index >= 0, "just checking");
     }
 }
 }
 k = mk->super(); // no match yet; continue to look
 }
 // we didn't find any public/protected method in the superclasses with
 // matching name and signature, but there could be a matching miranda
 // method in one of the superclasses which we would have to override.
 // NOTE: miranda methods are just public abstract methods that are
 // present in a class's vtable and not in its method table
 if (public_protected_index=-1) {
 instanceKlass *sk = instanceKlass::cast(super);
 if (sk->has_miranda methods()) {
 ResourceMark rm;
 public_protected_index=sk->vtable()->index_to_override_miranda(name,
 signature);
 }
 }
 // set the right indices according to the access
 if (target_method->is_public() ∥ target_method->is_protected()) {
 primary_index = public protected_index;
 other_index =P_private_index;
 }
 if (target_method->is_package_private()) {
 primary_index = P_private_index;
 other_index = public_protected_index;
 }
 if(target_method->is_private()) {
 primary_index =-1;
 other_index1 = public_protected_index;
 other_index2 = P_private_index;
 }
 }
 // Find out if a method "m" with superclass "super", loader "classloader" and
 // name "classname" needs a new vtable entry. Let P be a class package defined
 // by "classloader" and "classname".
 // NOTE: The logic used here is very similar to the one used for computing
 // the vtables indices for a method. We cannot directly use that function because,
 // when the Universe is boostrapping, a super's vtable might not be initialized.
 bool klassVtable::needs_new_vtable_entry(methodOop target_method,
                               klassOop super,
                               oop classloader,
                               symbolOop classname,
                               AccessFlags class_flags) {
                               if ((RespectFinal &&
(class_flags.is_final() ∥ target_method->is_final())) ∥
 // a final method never needs a new entry; final methods can be statically
 // resolved and they have to be present in the viable only if they override
 // a super's method, in which case they re-use its entry
 (target_method->is_static()) ∥
 // static methods don't need to be in vtable
 (target_method->name() = vmSymbols::object_initializer_name())
 // <init> is never called dynamically-bound
 ){
 return false;
 }
 // we need a new entry if there is no superclass
 if (super = NULL) {
 return true;
 }
 // private methods always have a new entry in the vtable
 if (target_method->is_private()) {
 return true;
 }
 // search through the super class hierarchy to see if we need
 // a new entry
 symbolOop name = target_method->name();
 symbolOop signature= target_method->signature();
 klassOop k = super;
 methodOop match_method = NULL;
 instanceKlass *holder= N-ULL;
 while (k != NULL) {
 // lookup through the hierarchy for a method with matching name and sign.
 match_method = instanceKlass::cast(k)->lookup_method(name, signature);
 if (match_method = NULL) {
 break; // we still have to search for a matching miranda method
 }
 // get the class holding the matching method
 holder=instanceKlass::cast(match method->method holder());
 if (!match_method->is_static()) { // we want only instance method matches
 if ((target_method->is_public() ∥ target_method->is_protected()) &&
      (match_method->is_public() ∥ match_method->is_protected())) {
     // target and match are public/protected; we do not need a new entry
  return false;
 }
      //--- begin new code
 // NOTE: This following 'if can nicely be folded with the if following it.
 if (UseNewLookupSemantics &&
   target_method->is_package_private() &&
   (match_method->is_public() ∥ match_method->is_protected()) &&
   holder->is_same_class_package(classloader, classname)) {
   // Accesibility has changed, need new entry
   return true;
 }
 //--- end new code
 if (target_method->is_package_private() &&
     match_method->is_package_private() &&
     holder->is_same_class_package(c)assloader, classname)) {
    // target and match are P private; we do not need a new entry
  return false;
 }
 }
 k = holder->super(); // haven't found a match yet; continue to look
 }
 // if the target method is public or protected it may have a matching
 // miranda method in the super, whose entry it should re-use.
 if (target_method->is_public () ∥ target_method->is_protected()) {
 instanceKlass *sk = instanceKlass::cast(super);
 if (sk->has_miranda_methods()) {
 if (sk->lookup_method_in_all_interfaces(name, signature) !=NULL) {
     return false; // found a matching miranda; we do not need a new entry
  }
  }
  return true; // found no match; we need a new entry
  }
  // compute the other non-primary vtable entries for a method "m",
  // used while updating the vtable (by the compiler).
  void klassVtable::compute_other_vtable_indices(int& other_index1,
                                   int& other_index2,
                                   methodOop m) {
                                   KlassHandle k = klass();
                                   klassOop super = instanceKlass::cast(k())->super();
                                   oop classloader = instanceKlass::cast(k:())->class_loader();
                                   symbolOop classname = Klass::cast(k())->name();
                                   int primary _index =-1;
                                   other_index1 =-1;
                                   other_index2 =-1;
                                   compute_all_vtable_indices(primary_i
ndex, other_index1, other_index2,
              m, super, classloader, classname);
              }
              // compute all the vtable indices for a method "m"
              void klassVtable::compute_all_vtable_indices(int& primary_index,
                                 int& other_index1,
                                 int& other_index2,
                                 methodOop m) {
                                 KlassHandle k = klass();
                                 klassOop super = instanceKlass::cast(k())->super();
                                 oop classloader = instanceKlass::cast(k())->class_loader();
                                 symbolOop classname = Klass::cast(k())->name();
                                 primary_index = -1;
                                 other_index = -1;
                                 other_index2 = -1;
                                 compute_all_vtable_indices(primary_ind
ex, other_index1, other_index2,
                    m, super, classloader, classname);
                    }
                    // Support for miranda methods
                    // get the vtable index of a miranda method with
matching "name" and "signature"
                    int klassvtable::index_of_miranda(symbolOop name,
symbolOop signature) {
                    // search from the bottom, might be faster
                    for (int i = (length() - 1); i >= 0; i--) {
                    methodOop m = table()[i].method;
                    if(is_miranda_entry_at(i)) {
 return i;
 }
 }
 return -1 ;
 }
 // get the vtable index of a matching miranda method to over-ride it; this
 // includes miranda methods overriden by package private or private methods
 int klassVtable::index_to_override_miranda(symbolOop name, symbolOop signature)
 {
 // search from the bottom, might be faster
 for (int i = (length() - 1); (i >= 0); i--) {
 methodOop m = table()[i].method;
 if (m->name() = name && m->signature() = signature) { // match
 // if there is a public version, it better be an interface method, otherwise we'd
 // have found it in the normal search through the methods table and we shouldn't
 // be here.
 if(m->is_public()) {
    assert(is_miranda_entry_at(i), "should be a miranda method");
    return i;
 }
 // if there is package private version or a private version at an index not equal
 // it's primary index then it must be over-riding a matching public method which
 // must be a miranda for reasons given above.
 else if (m->vtable_index() != i) {
    if (m->is_package_private()) {
   assert(overrides_miranda_at(i), "should override a miranda");
     return i;
    } else {
     // except that the private version could be over-riding a package private
     version.
     ResourceMark rm;
     methodOop om=instanceKlass::cast(m->method_holder())->vtable()-
     >method_at(i),
     if(!om->is_package_private()) {
    assert(overrides_miranda_at(i), "should override a miranda");
      return i;
     }
    }
 } else if(!m->has_other_vtable_indexl()) {
    return -1;
 }
 }
 }
 return -1;
 }
 // recursively check if this klass overrides a miranda method in any super
 bool klassVtable::overrides_miranda_at(int i) {
 ResourceMark rm;
 // skip klasses in between current klass and method holder's super
 // as the entry would be the same in their vtables
 klassOop super = instanceKlass::cast(method_at(i)->method_holder())->super();
 if (super == NULL) {
 return false; // no super
 } else {
 instanceKlass *sk = instanceKlass::cast(super);
 if (!sk->has_miranda methods()) {
 return false; // no miranda methods in super
 } else {
 ResourceMark rm;
 klassVtable *vt = sk->vtable();
 if (i >= vt->length()) {
    return false; !/ out of bounds, no vtable entry at this index
 } else if (vt->is_miranda_entry at(i)) {
    return true; // found one
 } else {
    return vt->overrides_miranda_at(i); // recurse through super's vtable
 }
 }
 }
 }
 // check if an entry is miranda
 bool klassVtable::is_miranda_entry_at(int i) {
 methodOop m = method_at(i);
 klassOop method_holder = m->method_holder();
 instanceklass *mhk = instanceKlass::cast(method holder);
 // miranda methods are interface methods in a class's vtable
 if(mhk->is_interface()) {
 assert(m->is_public() && m->is_abstract(), "should be public and abstract");
 assert(ik()->implements_interface(method_holder), "this class should implement
 the interface");
 assert(is_miranda(m, ik()->methods(), ik()->super()), "should be a
 miranda_method");
 return true;
 }
 return false;
 }
 // check if a method is a miranda method, given a class's methods table and it's super
 // the caller must make sure that the method belongs to an interface implemented by
 the class
 bool klassVtable::is_miranda(methodOop m, objArrayOop class_methods, klassOop
 super) {
 symbolOop name = m->name();
 symbolOop signature = m->signature();
 if (instanceKlass::fmd_method(class_methods, name, signature) == NULL) {
 // did not find it in the method table of the current class
 if (super = NULL) {
  // super doesn't exist
  return true;
 } else {
  if (instanceKlass::cast(super)->lookup method(name, signature) = NULL) {
     // super class hierarchy does not implement it
     return true;
  }
 }
 return false;
 }
 void klassVtable::add_new mirandas_to_list(GrowableArray<methodOop>*
 list_of_current_mirandas,
                                objArrayOop current_interface methods,
                                objArrayOop class_methods,
                                klassOop super) {
                                // iterate thru the current interface's
 method to see if it a miranda
                                int num_methods =
current_interface_methods->length();
                                for (int i = 0; i < num_methods; i++) {
 methodOop im = methodOop(current_interface_methods->obj_at(i));
 bool is_duplicate = false;
 int num_of_current_mirandas = list_of current_mirandas->length();
 // check for duplicate mirandas in different interfaces we implement
 for (intj = 0; j < num_of_current_mirandas; j++) {
 methodOopmiranda=list_of current_mirandas->at(j);
 if ((im->name() == miranda->name()) &&
      (im->signature() == miranda->sigrtatwe())) {
     is_duplicate = true;
     break;
 }
 }
 if (is_duplicate) { // we don't want duplicate miranda entries in the vtable
 if (is_miranda(im, class_methods, super)) {// is it it a miranda at all?
    instanceKlass *sk = instanceKlass::cast(super);
    // check if it is a duplicate of a super's miranda
    if (sk->lookup_rnethod_in_all_inte<faces(im->name(), im->signature()) ==
    NULL) {
      list_of_current_mirandas->append(im);
    }
 }
 }
 }
 }
 void klassVtable::get_mirandas(GrowableArray<methodOop>* mirandas,
                     klassOop super, objArrayOop class_methods,
                      objArryOop local_interfaces) {
                      assert((mirandas->length() = 0) , "current mirandas must be 0");
                      // iterate thru the local interfaces looking for a miranda
                      int num_local_ifs = loeal_interfaces->length();
                      for (int i = 0; i < num_local_ifs; i++) {
 instanceKlass *ik = instanceKlass::cast(klassOop(local_interfaces->obj_at(i)));
 add_new_mirandas_to_list(mirandas, ik->methods(), class_methods, super);
 // iterate thru each local's super interfaces
 objArrayOop super_ifs = ik->transitive_interfaces();
 int num_super_ifs = super_ifs->length();
 for (int j = 0; j < num_super_ifs; j++) {
 instanceKlass *sik = instanceKlass::cast(klassOop(super_ifs->obj_at(j)));
 add_new_mirandas_to_list(mirandas, sik->methods(), class_methods, super);
 }
 }
 }
 // get number of mirandas
 int klassVtable::get_num_mirandas(klassOop super, objArrayOop class_methods,
 objArrayOop local_interfaces) {
 ResourceMark rm;
 GrowableArray<methodOop>* mirandas = new GrowableArray<methodOop>(20);
 get_mirandas(mirandas, super, class_methods, local_interfaces);
 return mirandas->length();
 }
 // fill in mirandas
 void klassVtable::fill_in mirandas(int& initialized) {
 ResourceMark rm;
 GrowableArray<methodOop>* mirandas = new GrowableArray<methodOop>(20);
 instanceKlass *this_ik = ik();
 get_mirandas(mirandas, this_ik->super(), this_ik->methods(), this_ik-
 >local_interfaces());
 int num_mirandas = mirandas->length();
 for (int i = 0; i < num_mirandas; i++) {
 put_method_at(mirandas->at(i), initialized);
 initialized++;
 }
 }
 void klassVtable::copy_vtable_to(vtableEntry* start) {
 copy_oops((oop*)table(), (oop*)start, _length * vtableEntry::size());
 }
 // Garbage collection
 void klassVtable::oop_follow_contents() {
 int len = length();
 for (int i = 0; i < len; i++) {
 MarkSweep::mark_and_push((oop*)&table()[i].method);
 }
 }
 void klassVtable::oop_adjust_pointers() {
 int len = length();
 for (int i = 0; i < len; i++) {
 MarkSweep::adjust_pointer((oop*)&table()[i].method);
 }
 }
 // Iterators
 void klassVtable::oop_oop_iterate(OopClosure* blk) {
 int len = length();
 for (int i = 0; i < len; i++) {
 blk->do_oop((oop*)&table()[i].method);
 }
 }
 //
 // Itable code
 // Initialize a itableMethodEntry
 void itableMethodEntry::initialize(methodOop m) {
 if (m = NULL) return;
 _method = m;
 }
 klassItable::klassItable(instanceKIassHandle klass) {
 _klass = klass;
 if (klass->itable_length() > 0) {
 int* offset_entry = klass->start_of_itable();
 int offset=((itableOffsetEntry*)offset_entry)->offset();
 if (offset != 0) { // Itable is indeed initialized for this klass
 // First offset entry points to the first method_entry
 int* method_entry = (int *)(((address)klass->as_klassOop()) + offset);
 int* end =klass->end_of itable();
 _table_offset = offset_entry - (int*)klass->as_klassOop();
 _size_offset_table = (method_entry - offset_entry) / itableOffsetEntry::size();
 _size_method_table = (end - method_entry) / itabteMethodEntry::size();
 return;
 }
 _table_offset = 0;
 _size_offset_table = 0;
 _size_method_table = 0;
 }
 // Garbage Collection
 void klassItable::oop_follow_contents() {
 // offset table
 itableOffsetEntry* ioe = offset_entry(0);
 for(int i = 0; i <_size_offset_table, i++) {
 Mark-Sweep::mark_and_push((oop*)&ioe->_interface);
 ioe++;
 }
 // method table
 itableMethodEntry* ime = method_entry(0);
 for(int j = 0; j < _size_method_table; j++) {
 MarkSweep::mark_and_push((oop*)&ime-> method);
 ime++;
 }
 }
 void klassItable::oop_adjust_pointers() {
 // offset table
 itableOffsetEntry* ioe = offset_entry(0);
 for(int i = 0; i < _size_offset_table; i++) {
 MarkSweep::adjust_pointer((oop*)&ioe->_interface);
 ioe++;
 }
 // method table
 itableMethodEntry* ime = method_entry(0);
 for(int j = 0; j < _size_method_table; j++) {
 MarkSweep::adjust_pointer((oop*)&ime->_method);
 ime++;
 }
 }
 // Iterators
 void klassItable::oop_oop_iterate(OopClosure* blk) {
 // offset table
 itableOffsetEntry* ioe = offset_entry(0);
 for(int i = 0; i < _size_offset_table, i++) {
 blk->do_oop((oop*)&ioe->_interface);
 ioe++;
 }
 // method table
 itableMethodEntry* ime = method_entry(0);
 for(intj = 0; j <_size_method_table;j++) {
 blk->do_oop((oop*)&,ime->_method),
 ime++;
 }
 }
 static int initialize_count = 0;
 // Initialization
 void klassItable::initialize_itable() {
 // Cannot be setup doing bootstrapping
 if (Universe::is_bootstrapping()) return;
 int num_interfaces = nof_interfaces();
 if (num_interfaces > 0) {
 if (TraceItables) std->print_cr("%3d: Initializing itables for %s",
 ++initialize_count, _klass->name()->as_C_string());
 // In debug mode, we got an extra NULL/NULL entry
 debug_only(num_interfaces--);
 assert(num_interfaces > 0, "to few interfaces in offset itable");
 // Interate through all interfaces
 for(int i = 0; i < num_interfaces; i++) {
 itableOffsetEntry* ioe = offset_entry(i);
 klassOop interf= ioe->interface_klass();
 itableMethodEntry* ime = ioe->first_method_entry(_klass());
 assert(interf != NULL && ioe->offset() != 0, "bad offet entry in itable");
 initiatize_itable_for_interface(interf, ime);
 }
 #ifdef ASSERT
 // Check that the last entry is empty
 itableOffsetEntry* ioe = offset_entry(i);
 assert(ioe->interface_klass() = NULL && ioe->offset() = 0, "terminator entry
 missing");
 #endif
 }
 }
 void klassitable::initialize_itable_for_interface(klassOop interf; itableMethodEntry*
 ime) {
 objArrayOop methods = instanceKlass::cast(interf)->methods();
 int nof_methods = methods->length();
 HandleMark hm;
 KlassHandle klass = _klass;
 assert(nof_methods > 0, "at least one method must exist for interface to be in
 vtable")
 // Skip first methodOop if it is a class initializer
 int i = ((methodOop)methods->obj_at(0))->name() !=
 vmSymbols::class_initializer_name() ? 01 1;
 for(; i < nof_methods; i++) {
 methodOop m = (methodOop)methods->obj_at(i);
 symbolOop method_name = m->name();
 symbolOop method_signature = m->signature();
 // This is same code as in Linkresolver:lookup_instance_method_in_klasses
 methodOop target = MethodLookupCache::lookup_method(klass(), method_name,
 method_signature);
 while (target != NULL && target->is_static()) {
 // continue with recursive lookup through the superclass
 klassOop klass = Klass::cast(target->method_holder()->super();
  target = MethodLookupCache::lookup_method(klass, method_name,
  method_signature);
 }
 if (target =NULL ∥ !target->is_public() ∥ target->is_abstract()) {
 // Entry do not resolve. Leave it empty
 } else {
 ime->initialize(target);
 }
 // Progress to next entry
 ime++;
 }
 }
 // Update entry for specic methodOop
 void klassltable::initiatize_with_method(methodOop m) {
 itableMethodEntry* ime = method_entry(0);
 for(int i = 0; i < _size_method_table; i++) {
 if (ime->method() = m) {
 ime->initialize(m);
 }
 ime++;
 }
 }
 // Setup
 class InterfaceVisiterClosure : public StackObj {
 public:
 virtual void doit(klassOop intf, int method_count) = 0;
 };
 // Visit all interfaces with at least one method (excluding <clinit>)
 void visit_all_interfaces(objArrayOop transitive_intf, InterfaceVisiterClosure *blk) {
 // Handle array argument
 for(int i = 0; i < transitive_intf >length(); i++) {
 klassOop intf= (klassOop)transitive _intf->obj_at(i);
 assert(Klass::cast(intf)->is_interface(), "sanity check");
 // Find no. of methods excluding a <clinit>
 int method_count = instanceKlass::cast(intf)->methods()->length();
 if (method_count > 0) {
  methodOop m = (methodOop)instanceKlass::cast(intf)->methods()->obj_at(0);
  assert(m != NULL && m->is_method(), "sanity check");
  if (m->name() = vmSymbols::object_initializer_name()) {
   method_count-;
  }
 }
 // Only count interfaces with at least one method
 if (method_count > 0) {
 blk->doit(intf, method_count);
 }
 }
 }
 class CountInterfacesClosure : public InterfaceVisiterClosure {
 private:
 int_nof_methods;
 int_nof_interfaces;
 public:
 CountInterfacesClosure() { _nof_methods = 0; _nof_interfaces = 0; }
 int nof_methods() const { return _nof_methods; }
 int nof_interfaces() const { return _nof_interfaces; }
 void doit(klassOop intf, int method_count) { _nof_methods += method_count;
 _nof_interfaces++; }
 };
 class SetupItableClosure : public InterfaceVisiterClosure {
 private:
 itableOffsetEntry* _offset_entry;
 itableMethodEntry* _method_entry;
 address _klass_begin;
 public:
 SetupItableClosure(address klass_begin, itableOffsetEntry* offset_entry,
 itableMethodEntry* method_entry) {
 _klass _begin =klass_begin;
 _offset_entry = offset_entry;
 _method_entry = method_entry;
 }
 itableMethodEntry* method_entry() const { return_method_entry; }
 void doit(klassOop intf, int method_count) {
 int offset = ((address)_method_entry) - _klass_begin;
 _offset_entry->initialize(intf, offset);
 _offset_entry++;
 _method_entry += method_count;
 }
 };
 int klassItable::compute_itable_size(objArrayHandle transitive_interfaces) {
 if (!UseItables) return 0;
 // Count no of interfaces and total number of interface methods
 CountInterfacesClosure cic;
 visit_all_interfaces(transitive interfaces(), &cic);
 // Add one extra entry in debug mode, so we can null-terminate the table
 int nof_methods = cic.nof_methods();
 int nof_interfaces = cic.nof_interfaces();
 debug_only(if(nof interfaces > 0) nof_interfaces++),
 int itable_size = calc_itable_size(nof_interfaces, nof_methods);
 // Statistics
 update_stats(itable_size * wordSize);
 return itable_size;
 }
 // Fill out offset table and interface klasses into the itable space
 void klassItable::setup_itable_offset_table(instanceKlassHandle klass) {
 if (klass->itable_length() = 0) return;
 assert(UseItables && !klass->is_interface(), "Should have zero length itable");
 // Count no of interfaces and total number of interface methods
 CountInterfacesClosure cic;
 visit_all_interfaces(klass->transitive_interfaces(), &cic);
 int nof_methods = cic.nof_methods();
 int nof_interfaces = cic.nof_interfaces();
 // Add one extra entry in debug mode, so we can null-terminate the table
 debug_only(if(nof_interfaces > 0) nof_interfaces++);
 assert(compute_itable_size(klass->transitive_interfaces()) ==
 calc_itable_size(nof_interfaces, nof_methods),
  "mismatch calculation of itable size");
  // Fill-out offset table
  itableOffsetEntry* ioe=(itableOffsetEntry*)klass->start_of_itable();
  itableMethodEntry* ime = (itableMethodEntry*)(ioe + nof_interfaces);
  mt* end = klass>end_of_itable();
  assert((oop*)(ime + nof_methods) = klass->start_of_static_fields(), "wrong offset
  calculation (1)");
 assert((oop*)(end) == klass->start_of_static_fields(), "wrong offset
 calculation (2)");
 // Visit all interfaces and initialize itable offset table
 SetupItableClosure sic((address)klass->as_klassOop(), ioe, ime);
 visit_all_interfaces(klass->transitive_interfaces(), &sic);
 #ifdef ASSERT
 ime = sic.method_entry();
 oop* v = klass->start_of_static_fields();
 assert( (oop*)(ime) == v, "wrong offset calculation (2)");
 #endif
 }
 // m must be a method in an interface
 int klassItable::compute_itable_index(methodOop m) {
 klassOop intf= m->method_holder();
 assert(instanceKlass:cast(intf)->is_interface(), "sanity check");
 objArrayOop methods = instanceKlass::cast(intf)->methods();
 int index = 0;
 while(methods->obj_at(index) != m) {
 index++;
 assert(index < methods->length(), "should find index for resolve_invoke");
 }
 // Adjust for <clinit>, which is left out of table if first method
 if (methods->length() > 0 && ((methodOop)methods->obj_at(0))->name() =
 vinSymbols::class_initializer_name()) {
 index--;
 }
 return index;
 }
 //
 // Non-product code
 #ifndef PRODUCT
 void klassVtable::verify(outputStream* st, bool forced) {
 // make sure table is initialized
 if (!Universe::is_fully_initialized()) return;
 // avoid redundant verifies
 if (!forced && _verify_count = Universe::verify_count()) return;
 _verify_count = Universe::verify_count();
 oop* end_of_obj = (oop*)_klass() + _klass()->size();
 oop* end_of_vtable = (oop*)&table()[_length];
 if (end_of_vtable > end_of_obj) {
 fatall("klass %s: klass object too short (vtable extends beyond end)",
   _klass->inteernal_name());
   }
   for (int i = 0; i < _length; i++) table()[i].verify(this, st);
   // verify consistency with superKlass vtable
   klassOop super = _klass->super();
   if (super) {
 instanceKlass* sk = instanceKlass::cast(super);
 klassVtable* vt=sk->vtable();
 for (int i = 0; i < vt->length(); i++) {
  verify_against(st, vt, i);
 }
 }
 }
 void klassVtable::verify_against(outputStream* st, klassVtable* vt, int index) {
 vtableEntry* vte = &vt.>table()[index];
 if (vte->method->name() != table()[index].method->name() ∥
  vte->method->signature() != table()[index].method->signature()) {
 fatal("mismatched name/signature of vtable entries");
 }
 }
 void klassVtable::print() {
 ResourceMark rm;
 std->print("klassVtable for klass %s (length %d):\n", _klass->internal_name(),
 length());
 for (int i = 0; i < length(); i++) {
 table()[i].print();
 std->cr();
 }
 }
 void vtableEntry::verify(klassVtable* vt, outputStream* st) {
 FlagSetting fs(IgnoreLockingAssertions, true);
 assert(method != NULL, "must have set method");
 method->verify();
 // we sub_type, because it could be a miranda method
 if(!vt->klass()->is_subtype_of(method->method_holder()) {
 print();
 fatal1 ("vtableEntry %#lx: method is from subclass", this);
 }
 }
 void vtableEntry::print() {
 ResourceMark rm;
 std->print("vtableEntry %s: ", method->name()->as_C_string());
 if(Verbose) {
 std->print("m %#lx ", method);
 }
 }
 class VtableStats : AllStatic {
 public:
 static int no_klasses; // # classes with vtables
 static int no_array_klasses; // # array classes
 static int no_instance_klasses; // # instanceKlasses
 static int sum_of_vtable_len; // total # of vtable entries
 static int sum_of_array_vtable_len; // total # of vtable entries in array klasses only
 static int fixed; // total fixed overhead in bytes
 static int filler; // overhead caused by filler bytes
 static int entries; // total bytes consumed by vtable entries
 static int array_entries; // total bytes consumed by array vtable entries
 static void do_class(klassOop k) {
 Klass* kl = k->klass_part();
 klassVtable* vt = kl->vtable();
 if(vt == NULL) return;
 no_klasses++;
 if(kl->oop_is_instance()) {
  no_instance_klasses++;
  kl->array_klasses_do(do_class);
 }
 if(kl->oop_is_array()) {
  no_array_klasses++;
  sum_of array_vtable_len+=vt->length();
 }
 sum_of_vtable_len += vt->length();
 }
 static void compute() {
 SystemDictionary::classes_do(do_class);
 fixed = no_klasses * oopSize; // vtable length
 // filler size is a conservative approximation
 filler = oopSize * (no_klasses - no_instancc_klasses) * (sizeof(instanceKlass) -
 sizeof(arrayKlass) - 1);
 entries = sizeof(vtableEntry) * sum_of vtable_len;
 array_entries = sizeof(vtableEntry) * sum_of_array_vtable_len;
 }
 };
 int VtableStats::no_klasses = 0;
 int VtableStats::no_array_klasses = 0;
 int VtableStats::no_instance_klasses = 0;
 int VtableStats::sum_of_vtable_len = 0;
 int VtableStats::sum_of_away_vtable_len = 0;
 int VtableStats::fixed = 0;
 int VtableStats::filler= 0;
 int VtableStats::entries = 0;
 int VtableStats::array_entries = 0;
 void klassVtable::print_statistics() {
 ResourceMark rm;
 HandleMark hm;
 VtableStats::compute();
 std->ptint_cr("vtable statistics:");
 std->print_cr("%6d classes (%d instance, %d array)", VtableStats::no_klasses,
 VtableStats::no_instance_klasses, VtableStats::no_array_klasses);
 int total = VtableStats::fixed + VtableStats::filler + VtableStats::entries;
 std->print_cr("%6d bytes fixed overhead (refs + vtable object header)",
 VtableStats::fixed);
 std->print_cr("%6d bytes filler overhead", VtableStats::filler);
 std->print_cr("%6d bytes for vtable entries (%d for arrays)", VtableStats::entries,
 VtableStats::array_entries);
 std->print_cr("%6d bytes total", total);
 }
 int klassItable::_total_classes; // Total no. of classes with itables
 long klassItable_total_size; // Total no. of bytes used for itables
 void klassItable::print_statistics() {
 std->print_cr("itable statistics:");
 std->print_cr("%6d classes with itables", _total_classes);
 std->print_cr("%6d K uses for itables (average by class: %d bytes)", _total_size / K,
 _total_size / _total_classes);
 }
 #endif // PRODUCT
 /*
 * @(#)klassVtable.hpp 1.32 99/07/30 18:11:57
 *
 * Copyright 1993-1999 by Sun Microsystems, Inc.,
 * 901 San Antonio Road, Palo Alto, California, 94303, U.S.A.
 * All rights reserved.
 *
 * This software is the confidential and proprietary information
 * of Sun Microsystems, Inc. ("Confidential Information"). You
 * shall not disclose such Confidential Information and shall use
 * it only in accordance with the terms of the license agreement
 * you entered into with Sun.
 */
 // CopyrightVersion 1.2
 // A klassVtable abstracts the variable-length vtable that is embedded in instanceKlass
 // and arrayKlass. klassVtable objects are used just as convenient transient accessors
 to the vtable,
 // not to actually hold the vtable data.
 // Note: the klassVtable should not be accessed before the class has been verified
 // (until that point, the vtable is uninitialized).
 // Currently a klassVtable contains a direct reference to the vtable data, and is
 therefore
 // not preserved across GCs.
 class vtableEntry;
 class klassVtable : public ResourceObj {
 KlassHandle _klass; // my klass
 int _tableOffset; // offset of start of vtable data within klass
 int _length; // length of vtable (number of entries)
 #ifndef PRODUCT
 int _verify_count; // to make verify faster
 #endif
 // Ordering important, so greater_than (>) can be used as an merge operator.
 enum AccessType {
 acc_private = 0,
 acc_package_private= 1,
 acc_publicprotected = 2
 } ;
 public:
 klassVtable(klassOop klass, void* base, int length) : _klass(klass) {
 _tableOffset = (address)base - (address)klass; _length = length;
 }
 // accessors
 vtableEntry* table() const { return (vtableEntry*)(address(_klass()) +
 _tableOffset); }
 KlassHandle klass() const {return _klass; }
 int length() const { return _length; }
 inline methodOop method_at(int i) const;
 // searching; all methods return -1 if not found
 int index_of(methodOop m) const { return index_of(m, _length); }
 int index_of(symbolOop name, symbolOop signature) const { return index_of(name,
 signature, _length); }
 int index_of_miranda(symbolOop name, symbolOop signature);
 void initialize_vtabte(); // initialize vtable of a new klass
 // Implementation of revised lookup semantics
 void initialize_vtable2(); // initialize vtable of a new klass
 bool update_super_vtable2(instanceKlass* klass, methodOop target_method, int
 super_vtable_len);
 // conputes vtable length (in words) and the number of miranda methods
 static void compute_vtable_size_and_num_mirandas(int &vtable_length, int
 &num_miranda_methods,
                                      klassOop super, objArrayOop methods,
                                      Accessflags class_flags, oop
                                      classloader,
                                      symbolOop classname, objArrayOop
                                      local_interfaces);
                                      // Garbage collection
                                      void oop_follow_contents();
                                      void oop_adjust_pointers();
                                      // Iterators
                                      void oop_oop_iterate(OopClosure* blk);
                                      // Debugging code
                                      void print() PRODUCT_RETURN;
                                      void verify(outputStream* st,
bool force = false) PRODUCT_RETURN;
                                      static void print_statistics()
PRODUCT_RETURN;
                                      protected:
                                      friend class vtableEntry;
                                      private:
                                      void copy_vtable_to(vtableEntry* start);
                                      int initialize_from_super(KlassHandle super);
                                      int index_of(methodOop m, int
len) const; // same as index_of, but search only up to
                                      len
                                      int index_of(symbolOop name,
symbolOop signature, int len) const;
                                      void put_method_at(methodOop m,
int index);
                                      void
compute_all_vtable_indices(int& primary_index, int& other_index1, int&
                                      other_index2, methodOop m);
                                      void
compute_Other_vtable_indices(int& other_index1, int& other_index2,
                                      methodOop m);
                                      static void
compute_all_vtable_indices(int& primary_ index, int& other_index1, int&
                                      other_index2, methodOop m,
klassOop super, oop classloader, symbolOop
                                      classname);
                                      static bool
needs_new_vtable_entry(methodOop m, klassOop super, oop classloader,
                                      symbolOop classname, AccessFlags access_flags);
                                      AccessType vtable_accessibility_at(int i);
                                      // support for miranda methods
                                      int
index_to_override_miranda(symbolOop name, symbolOop signature);
                                      boot overrides_miranda_at(inf i);
                                      boo] is_miranda_entry_at(int i);
                                      void fill_in_mirandas(int& initialized);
                                      static bool is_miranda(methodOop
m, objArrayOop class_methods, klassOop super);
                                      static void
add_new_mirandas_to_list(GrowableArray<methodOop>*
                                      list_of current_mirandas,
objArrayOop current_interface_methods, objArrayOop
                                      class_methods, klassOop super);
                                      static void
get_mirandas(GrowableArray<methodOop>* mirandas, klassOop super,
                                      objArrayOop class_methods, objArrayOop local_interfaces);
                                      static int
get_num_mirandas(klassOop super, objArrayOop class_methods,
                                      objArrayOop local_interfaces);
                                      void verify_against(outputStream*
st, klassVtable* vt, int index)
                                      PRODUCT_RETURN;
                                      inline instanceKlass* ik() const
                                      };
                                      // private helper class for klassVtable
                                      // description of entry points:
                                      // destination is interpreted:
                                      // from_compiled_code_entry_point -> c2iadapter
                                      // from_interpreter_entry_point -> interpreter entry point
                                      // destination is compiled:
                                      // from_compiled_code_entry_point -> nmethod entry point
                                      // from_interpreter_entry_point -> i2cadapter
                                      class vtableEntry VALUE_OBJ_CLASS_SPEC {
                                      public:
                                      static int size() { return
sizeof(vtableEntry) / oopSize; } // size in
                                      words
                                      static int method_offset_in
bytes() { return (int)&((vtableEntry*)NULL)-
                                      >method; }
                                      private:
                                      methodOop method;
                                      void set(methodOop m) { assert(m
!= NULL, "use clear"); method = m; }
                                      void clear() { method = PULL; }
                                      void print() PRODUCT_RETURN;
                                      void verify(klassVtable* vt,
outputStream* st) PRODUCT_RETURN;
                                      friend class klassVtable;
                                      };
                                      inline methodOop klassVtable::method_at(int i) const {
                                      assert(i >= 0 && i <_length, "index out of bounds");
                                      assert(table()[i].method != NULL, "should not be null");
                                      assert(oop(table()[i].method)->is
_method(), "should be method");
                                      return table()[i].method;
                                      }
                                      // -----
                                      class klassItable;
                                      class itableMethodEntry;
                                      class itableOffsetEntry VA-LUE_OBJ_CLASS_SPEC {
                                      private:
                                      klassOop_interface,
                                      int _offset;
                                      public:
                                      klassOop interface_klass() const { return _interface; }
                                      int offset() const { return _offset; }
                                      itableMethodEntry* first_method_entry(klassOop k) { return
                                      (itableMethodEntry*)(((address)k) + _ offset); }
                                      void initialize(klassOop interf,
 int offset) { _interface = interf; _offset = offset; }
                                      // Static size and offset accessors
                                      static int size() { return
sizeof(itableOffsetEntry) / wordSize; } // size
                                      in words
                                      static int
interface_offset_in_bytes() { return (int)&((itableOffsetEntry*)NULL)-
                                      >_interface; }
                                      static int
offset_offset_in_bytes() { return (int)&((itableOffsetEntry*)NULL)-
                                      >_offset;} }
                                      friend class klassItable;
                                      };
                                      class itableMethodEntry VALUE_OBJ_CLASS_SPEC {
                                      private:
                                      methodOop method;
                                      public:
                                      methodOop method() const { return _methods; }
                                      void clear() { _method = NULL; }
                                      void initialize(methodOop method);
                                      // Static size and offset accessors
                                      static int size() { return
sizeof(itableMethodEntry) / wordSize; } //
                                      size in words
                                      static int
method_offset_in_bytes() { return (int)&((itableMethodEntry*)NULL)-
                                      >_method; }
                                      friend class klassltable;
                                      };
                                      //
                                      // Format of an itable
                                      //
                                      // ---offset table---
                                      // klassOop of interface 1 \
                                      // offset to vtable from start ofoop / offset table entry
                                      // ...
                                      // klassOop of interface n \
                                      // offset to vtable from start of oop / offset table entry
                                      // --- vtable for interface 1 ---
                                      // methodOop \
                                      // compiler entry point / method table entry
                                      // ...
                                      // methodOop \
                                      // compiler entry point / method table entry
                                      // -- vtable for interface 2 ---
                                      // ...
                                      //
                                      class klassItable : public ResourceObj {
                                      private:
                                      instanceKlassHandle _klass; // my klass
                                      int _table_offset; // offset of
start of itable data within klass (in words)
                                      int _size_offset_table; // size
of offset table (in itableOffset entries)
                                      int _size_method_table; // size
of methodtable (in itableMethodEntry
                                      entries)
                                      void
initialize_itable_for_interface(klassOop interf, itableMethodEntry*
                                      method_table);
                                      public:
                                      klassItable(instanceKlassHandle klass);
                                      itableOffsetEntry*
offset_entry(int i) { assert(0 <= i && i <= size_offset_table,
                                      "index out of bounds");
                     return &((itableOffsetEntry*)vtable_start())[i]; }
                     itableMethodEntry* method_entry(int i) { assert(0 <= i && i <=
                     _size_method_table, "index out of bounds");
                     return &((itableMethodEntry*)method_start())[i]; }
                     int nof_interfaces() { return _size_offset_table; }
                     // Initialization
                     void initialize_itable();
                     // Updates
                     void initialize_with_method(methodOop m);
                     // Garbage collection
                     void oop_follow_contents();
                     void oop_adjust_pointers();
                     // Iterators
                     void oop_oop_iterate(OopClosure* blk);
                     // Setup of itable
                     static int compute_itable_size(objArrayHandle transitive_interfaces);
                     static void setup_itable_offset_table(instanceKlassHandle klass);
                     // Resolving of method to index
                     static int compute_itable_index(methodOop m);
                     // Debugging/Statistics
                     static void print_statistics() PRODUCT_RETURN;
                     private:
                     int* vtable_start() const { return ((int*)_klass()) + _table_offset; }
                     int* method_start() const { return vtable_start() + _size_offset_table *
                     itableOffsetEntry::size(); }
                     // Helper methods
                     static int calc_itable_size(int num_interfaces, int num_methods) { return
                     (num_interfaces * itableOffsetEntry::size()) + (num_methods *
                     itableMethodEntry::size()); }
                     // Statistics
                     NOT_PRODUCT(static int _total_classes;) // Total no. of classes with itables
                     NOT_PRODUCT(static long _total_size;) // Total no. of bytes used for itables
                     static void update_stats(int size) PRODUCT_RETURN NOT_PRODUCT({
                     _total_classes++; _total_size += size; })
                     };
```

## Claims

1. A computer implemented method for constructing a dispatch table for a class C, wherein the class C is within a modularity construct P and has a superclass S, the superclass S having an S dispatch table associated therewith, said method comprising:
replicating the S dispatch table to derive a C dispatch table for class C;
for a method m in class C which has been declared as being public, determining whether there is at least one matching entry in the S dispatch table which corresponds to a matching method of superclass S having the same name as method m;
in response to a determination that there is at least one matching entry in the S dispatch table, determining whether the at least one matching entry, which comprises a code pointer which points to a set of code, is declared as being private to modularity construct P; and
in response to a determination that the at least one matching entry is declared as being private to modularity construct P, updating a corresponding entry in said C dispatch table which corresponds to the at least one matching entry in the S dispatch table to declare said corresponding entry in said C dispatch table as being public, updating said corresponding entry in said C dispatch table comprising storing in said corresponding entry of said C dispatch table a new code pointer which points to a different set of code, thereby enabling said class C to provide a different implementation for said method m than that provided by the superclass S.

2. The method of claim 1, further comprising:
in response to a determination that there is at least one matching entry in the S dispatch table, determining whether any of the matching entries is declared as being public;
in response to a determination that any of the matching entries is declared as being public, selecting one of the matching entries which has been declared as being public to be a selected matching entry, the selected matching entry comprising a code pointer which points to a set of code; and
updating a second corresponding entry in said C dispatch table which corresponds to the selected matching entry in the S dispatch table by storing in said second corresponding entry of said C dispatch table a new code pointer which points to a different set of code, thereby enabling said class C to provide a different implementation for said method m than that provided by the superclass S.

3. The method of claim 1, further comprising:
in response to a determination that there is at least one matching entry in the S dispatch table, determining whether any of the matching entries is declared as being public;
in response to a determination that none of the matching entries is declared as being public, allocating a new entry in said C dispatch table; and
updating said new entry by declaring said new entry as being public, and by storing a new code pointer in said new entry.

4. The method of any preceding claim, further comprising:
for a method m in class C which has been declared as being private to modularity construct P, determining whether there is at least one matching entry in the S dispatch table which corresponds to a matching method of superclass S having the same name as method m;
in response to a determination that there is at least one matching entry in the S dispatch table, determining whether the at least one matching entry, which comprises a code pointer which points to a set of code, is declared as being public; and
in response to a determination that the at least one matching entry is declared as being public, updating a corresponding entry in said C dispatch table which corresponds to the at least one matching entry in the S dispatch table to declare said corresponding entry in said C dispatch table as being public, updating said corresponding entry in said C dispatch table comprising storing in said corresponding entry of said C dispatch table a new code pointer which points to a different set of code, thereby enabling said class C to provide a different implementation for said method m than that provided by the superclass S.

5. The method of claim 4, further comprising:
in response to a determination that there is at least one matching entry in the S dispatch table, determining whether any of the matching entries is declared as being private to modularity construct P;
in response to a determination that any of the matching entries is declared as being private to modularity construct P, selecting one of the matching entries which has been declared as being private to modularity construct P to be a selected matching entry, the selected matching entry comprising a second code pointer which points to a second set of code; and
updating a second corresponding entry in said C dispatch table which corresponds to the selected matching entry in the S dispatch table by storing in said second corresponding entry of said C dispatch table said new code pointer which points to said different set of code, thereby enabling said class C to provide a different implementation for said method m than that provided by the superclass S.

6. The method of claim 4, further comprising:
in response to a determination that there is at least one matching entry in the S dispatch table, determining whether any of the matching entries is declared as private to modularity construct P;
in response to a determination that none of the matching entries is declared as being private to modularity construct P, allocating a new entry in said C dispatch table; and
updating said new entry by declaring said new entry as being private to modularity construct P, and storing said new code pointer in said new entry.

7. A computer readable medium having stored thereon instructions which, when executed by one or more processors, cause the one or more processors to carry out the method of any preceding claim.

8. An apparatus for constructing a dispatch table for a class C, wherein the class C is within a modularity construct P and has a superclass S, the superclass S having an S dispatch table associated therewith, said apparatus comprising:
a mechanism for replicating the S dispatch table to derive a C dispatch table for class C;
a mechanism for determining, for a method m in class C which has been declared as being public, whether there is at least one matching entry in the S dispatch table which corresponds to a matching method of superclass S having the same name as method m;
a mechanism for determining, in response to a determination that there is at least one matching entry in the S dispatch table, whether the at least one matching entry, which comprises a code pointer which points to a set of code, is declared as being private to modularity construct P; and
a mechanism for updating, in response to a determination that the at least one matching entry is declared as being private to modularity construct P, a corresponding entry in said C dispatch table which corresponds to the at least one matching entry in the S dispatch table to declare said corresponding entry in said C dispatch table as being public, updating said corresponding entry in said C dispatch table comprising storing said corresponding entry of said C dispatch table a new code pointer which points to a different set of code, thereby enabling said class C to provide a different implementation for said method m than that provided by the superclass S.

9. The apparatus of claim 8, further comprising:
a mechanism for determining, in response to a determination that there is at least one matching entry in the S dispatch table, whether any of the matching entries is declared as being public;
a mechanism for selecting, in response to a determination that any of the matching entries is declared as being public, one of the matching entries which has been declared as being public to be a selected matching entry, the selected matching entry comprising a code pointer which points to a set of code; and
a mechanism for updating a second corresponding entry in said C dispatch table which corresponds to the selected matching entry in the S dispatch table by storing in said second corresponding entry of said C dispatch table a new code pointer which points to a different set of code, thereby enabling said class C to provide a different implementation for said method m than that provided by the superclass S.

10. The apparatus of claim 8, further comprising:
a mechanism for determining, in response to a determination that there is at least one matching entry in the S dispatch table, whether any of the matching entries is declared as being public;
a mechanism for allocating, in response to a determination that none of the matching entries is declared as being public, a new entry in said C dispatch table; and
a mechanism for updating said new entry by declaring said new entry as being public, and by storing a new code pointer in said new entry.

11. The apparatus of any of claims 8 to 10, further comprising:
a mechanism for determining, for a method m in class C which has been declared as being private to modularity construct P, whether there is at least one matching entry in the S dispatch table which corresponds to a matching method of superclass S having the same name as method m;
a mechanism for determining, in response to a determination that there is at least one matching entry in the S dispatch table, whether the at least one matching entry, which comprises a code pointer which points to a set of code, is declared as being public; and
a mechanism for updating, in response to a determination that the at least one matching entry is declared as being public, a corresponding entry in said C dispatch table which corresponds to the at least one matching entry in the S dispatch table by storing in said corresponding entry of said C dispatch table a new code pointer which points to a different set of code, thereby enabling said class C to provide a different implementation for said method m than that provided by the superclass S to declare said corresponding entry in said C dispatch table as being public.

12. The apparatus of claim 11, further comprising:
a mechanism for determining, in response to a determination that there is at least one matching entry in the S dispatch table, whether any of the matching entries is declared as being private to modularity construct P;
a mechanism for selecting, in response to a determination that any of the matching entries is declared as being private to modularity construct P, one of the matching entries which has been declared as being private to modularity construct P to be a selected matching entry, the selected matching entry comprising a second code pointer which points to a second set of code; and
a mechanism for updating a second corresponding entry in said C dispatch table which corresponds to the selected matching entry in the S dispatch table by storing in said second corresponding entry of said C dispatch table said new code pointer which points to said different set of code, thereby enabling said class C to provide a different implementation for said method m than that provided by the superclass S.

13. The apparatus of claim 11, further comprising:
a mechanism for determining, in response to a determination that there is at least one matching entry in the S dispatch table, whether any of the matching entries is declared as private to modularity construct P;
a mechanism for allocating, in response to a determination that none of the matching entries is declared as being private to modularity construct P, a new entry in said C dispatch table; and
a mechanism for updating said new entry by declaring said new entry as being private to modularity construct P, and storing said new code pointer in said new entry.

## Patentansprüche

1. Computerimplementiertes Verfahren zum Konstruieren einer Dispatch-Tabelle für eine Klasse C, wobei die Klasse C in einem Modularitätskonstrukt P liegt und eine Superklasse S aufweist, wobei eine S-Dispatch-Tabelle mit der Superklasse S assoziiert ist, wobei das Verfahren Folgendes umfasst:
Replizieren der S-Dispatch-Tabelle, um eine C-Dispatch-Tabelle für Klasse C abzuleiten;
für eine Methode m in der Klasse C, die als öffentlich deklariert wurde, Bestimmen, ob mindestens ein übereinstimmender Eintrag in der S-Dispatch-Tabelle vorliegt, der einer übereinstimmenden Methode der Superklasse S mit demselben Namen wie die Methode m entspricht;
als Reaktion auf eine Bestimmung, dass mindestens ein übereinstimmender Eintrag in der S-Dispatch-Tabelle vorliegt, Bestimmen ob der mindestens eine übereinstimmende Eintrag, der einen Codezeiger umfasst, der auf eine Menge von Code zeigt, bezüglich des Modularitätskonstrukts P als privat deklariert ist; und
als Reaktion auf eine Bestimmung, dass der mindestens eine übereinstimmende Eintrag in Bezug auf das Modularitätskonstrukt P als privat deklariert ist, Aktualisieren eines entsprechenden Eintrags in der C-Dispatch-Tabelle, der dem mindestens einen übereinstimmenden Eintrag in der S-Dispatch-Tabelle entspricht, um den entsprechenden Eintrag in der C-Dispatch-Tabelle als öffentlich zu deklarieren, Aktualisieren des entsprechenden Eintrags in der C-Dispatch-Tabelle, umfassend Speichern eines neuen Codezeigers, der auf eine andere Menge von Code zeigt, in dem entsprechenden Eintrag der C-Dispatch-Tabelle, um es dadurch der Klasse C zu ermöglichen, eine andere Implementierung für die Methode m als die durch die Superklasse S bereitgestellte bereitzustellen.

2. Verfahren nach Anspruch 1, ferner umfassend:
als Reaktion auf eine Bestimmung, dass mindestens ein übereinstimmender Eintrag in der S-Dispatch-Tabelle vorliegt, Bestimmen, ob irgendeiner der übereinstimmenden Einträge als öffentlich deklariert ist;
als Reaktion auf eine Bestimmung, dass irgendeiner der übereinstimmenden Einträge als öffentlich deklariert ist, Auswählen eines der übereinstimmenden Einträge, der als öffentlich deklariert wurde, ein ausgewählter übereinstimmender Eintrag zu sein, wobei der ausgewählte übereinstimmende Eintrag einen Codezeiger umfasst, der auf eine Menge von Code zeigt; und
Aktualisieren eines zweiten entsprechenden Eintrags in der C-Dispatch-Tabelle, der dem ausgewählten übereinstimmenden Eintrag in der S-Dispatch-Tabelle entspricht, durch Speichern eines neuen Codezeigers, der auf eine andere Menge von Code zeigt, in dem zweiten entsprechenden Eintrag der C-Dispatch-Tabelle, um dadurch der Klasse C zu ermöglichen, eine andere Implementierung für die Methode m als die durch die Superklasse S bereitgestellte bereitzustellen.

3. Verfahren nach Anspruch 1, ferner umfassend:
als Reaktion auf eine Bestimmung, dass mindestens ein übereinstimmender Eintrag in der S-Dispatch-Tabelle vorliegt, Bestimmen, ob irgendeiner der übereinstimmenden Einträge als öffentlich deklariert ist; als Reaktion auf eine Bestimmung, dass keiner der übereinstimmenden Einträge als öffentlich deklariert ist Vergeben eines neuen Eintrags, in der C-Dispatch-Tabelle; und
Aktualisieren des neuen Eintrags durch Deklarieren des neuen Eintrags als öffentlich und durch Speichern eines neuen Codezeigers in dem neuen Eintrag.

4. Verfahren nach einem der vorhergehenden Ansprüche, ferner umfassend:
für eine Methode m in der Klasse C, die in Bezug auf das Modularitätskonstrukt P als privat deklariert wurde, Bestimmen, ob mindestens ein übereinstimmender Eintrag in der S-Dispatch-Tabelle vorliegt, der einer übereinstimmenden Methode der Superklasse S mit demselben Namen wie die Methode m entspricht;
als Reaktion auf eine Bestimmung, dass mindestens ein übereinstimmender Eintrag in der S-Dispatch-Tabelle vorliegt, Bestimmen, ob der mindestens eine übereinstimmende Eintrag, der einen Codezeiger umfasst, der auf eine Menge von Code zeigt, als öffentlich deklariert ist; und
als Reaktion auf eine Bestimmung, dass der mindestens eine übereinstimmende Eintrag als öffentlich deklariert ist, Aktualisieren eines entsprechenden Eintrags in der C-Dispatch-Tabelle, der dem mindestens einen übereinstimmenden Eintrag in der S-Dispatch-Tabelle entspricht, um den entsprechenden Eintrag in der C-Dispatch-Tabelle als öffentlich zu deklarieren, Aktualisieren des entsprechenden Eintrags in der C-Dispatch-Tabelle, umfassend Speichern eines neuen Codezeigers, der auf eine andere Menge von Code zeigt, in dem entsprechenden Eintrag der C-Dispatch-Tabelle, um dadurch der Klasse C zu ermöglichen, eine andere Implementierung für die Methode m als die durch die Superklasse S bereitgestellte bereitzustellen.

5. Verfahren nach Anspruch 4, ferner umfassend:
als Reaktion auf eine Bestimmung, dass mindestens ein übereinstimmender Eintrag in der S-Dispatch-Tabelle vorliegt, Bestimmen, ob irgendeiner der übereinstimmenden Einträge in Bezug auf das Modularitätskonstrukt P als privat deklariert ist;
als Reaktion auf eine Bestimmung, dass irgendeiner der übereinstimmenden Einträge in Bezug auf das Modularitätskonstrukt P als privat deklariert ist, Auswählen eines der übereinstimmenden Einträge, der in Bezug auf das Modularitätskonstrukt P als privat deklariert wurde, ein ausgewählter übereinstimmender Eintrag zu sein, wobei der ausgewählte übereinstimmende Eintrag einen zweiten Codezeiger umfasst, der auf eine zweite Menge von Code zeigt; und
Aktualisieren eines zweiten entsprechenden Eintrags in der C-Dispatch-Tabelle, der dem ausgewählten übereinstimmenden Eintrag in der S-Dispatch-Tabelle entspricht, durch Speichern des neuen Codezeigers, der auf die andere Menge von Code zeigt, in dem zweiten entsprechenden Eintrag der C-Dispatch-Tabelle, um dadurch der Klasse C zu ermöglichen, eine andere Implementierung für die Methode m als die durch die Superklasse S bereitgestellte bereitzustellen.

6. Verfahren nach Anspruch 4, ferner umfassend:
als Reaktion auf eine Bestimmung, dass mindestens ein übereinstimmender Eintrag in der S-Dispatch-Tabelle vorliegt, Bestimmen, ob irgendeine der übereinstimmenden Einträge in Bezug auf das Modularitätskonstrukt P als privat deklariert ist;
als Reaktion auf eine Bestimmung, dass keiner der übereinstimmenden Einträge in Bezug auf das Modularitätskonstrukt P als privat deklariert ist, Vergeben eines neuen Eintrags in der C-Dispatch-Tabelle; und
Aktualisieren des neuen Eintrags durch Deklarieren des neuen Eintrags in Bezug auf das Modularitätskonstrukt P als privat und Speichern des neuen Codezeigers in dem neuen Eintrag.

7. Computerlesbares Medium, auf dem Anweisungen gespeichert sind, die, wenn sie durch einen oder mehrere Prozessoren ausgeführt werden, bewirken, dass der eine oder die mehreren Prozessoren das Verfahren nach einem der vorhergehenden Ansprüche ausführen.

8. Vorrichtung zum Konstruieren einer Dispatch-Tabelle für eine Klasse C, wobei die Klasse C in einem Modularitätskonstrukt P liegt und eine Superklasse S aufweist, wobei mit der Superklasse S eine S-Dispatch-Tabelle assoziiert ist, wobei die Vorrichtung Folgendes umfasst:
einen Mechanismus zum Replizieren der S-Dispatch-Tabelle, um eine C-Dispatch-Tabelle für Klasse C abzuleiten;
einen Mechanismus zum Bestimmen für eine Methode m in der Klasse C, die als öffentlich deklariert wurde, ob mindestens ein übereinstimmender Eintrag in der S-Dispatch-Tabelle vorliegt, der einer übereinstimmenden Methode der Superklasse S mit demselben Namen wie die Methode m entspricht;
einen Mechanismus zum Bestimmen als Reaktion auf eine Bestimmung, dass mindestens ein übereinstimmender Eintrag in der S-Dispatch-Tabelle vorliegt, ob der mindestens eine übereinstimmende Eintrag, der einen Codezeiger umfasst, der auf eine Menge von Code zeigt, in Bezug auf das Modularitätskonstrukt P als privat deklariert ist; und
einen Mechanismus, der als Reaktion auf eine Bestimmung, dass der mindestens eine übereinstimmende Eintrag in Bezug auf das Modularitätskonstrukt P als privat deklariert ist, einen entsprechenden Eintrag in der C-Dispatch-Tabelle, der dem mindestens einen übereinstimmenden Eintrag in der S-Dispatch-Tabelle entspricht, aktualisiert, um den entsprechenden Eintrag in der C-Dispatch-Tabelle als öffentlich zu deklarieren, den entsprechenden Eintrag in der C-Dispatch-Tabelle aktualisiert, umfassend Speichern eines neuen Codezeigers, der auf eine andere Menge von Code zeigt, in dem entsprechenden Eintrag der C-Dispatch-Tabelle, um dadurch der Klasse C zu ermöglichen, eine andere Implementierung für die Methode m als die durch die Superklasse S bereitgestellte bereitzustellen.

9. Vorrichtung nach Anspruch 8, ferner umfassend:
einen Mechanismus zum Bestimmen als Reaktion auf eine Bestimmung, dass mindestens ein übereinstimmender Eintrag in der S-Dispatch-Tabelle vorliegt, ob irgendeiner der übereinstimmenden Einträge als öffentlich deklariert ist;
einen Mechanismus, der als Reaktion auf eine Bestimmung, dass irgendeiner der übereinstimmenden Einträge als öffentlich deklariert ist, einen der übereinstimmenden Einträge, die als öffentlich deklariert wurden, auswählt, ein ausgewählter übereinstimmender Eintrag zu sein, wobei der ausgewählte übereinstimmende Eintrag einen Codezeiger umfasst, der auf eine Menge von Code zeigt; und
einen Mechanismus zum Aktualisieren eines zweiten entsprechenden Eintrags in der C-Dispatch-Tabelle, der dem ausgewählten übereinstimmenden Eintrag in der S-Dispatch-Tabelle entspricht, durch Speichern eines neuen Codezeigers, der auf eine andere Menge von Code zeigt, in dem zweiten entsprechenden Eintrag der C-Dispatch-Tabelle, um dadurch der Klasse C zu ermöglichen, eine andere Implementierung für die Methode m als die durch die Superklasse S bereitgestellte bereitzustellen.

10. Vorrichtung nach Anspruch 8, ferner umfassend:
einen Mechanismus zum Bestimmen als Reaktion auf eine Bestimmung, dass mindestens ein übereinstimmender Eintrag in der S-Dispatch-Tabelle vorliegt, ob irgendeiner der übereinstimmenden Einträge als öffentlich deklariert ist;
einen Mechanismus, der als Reaktion auf eine Bestimmung, dass keiner der übereinstimmenden Einträge als öffentlich deklariert ist, einen neuen Eintrag in der C-Dispatch-Tabelle vergibt; und
einen Mechanismus zum Aktualisieren des neuen Eintrags durch Deklarieren des neuen Eintrags als öffentlich und durch Speichern eines neuen Codezeigers in dem neuen Eintrag.

11. Vorrichtung nach einem der Ansprüche 8 bis 10, ferner umfassend:
einen Mechanismus zum Bestimmen für eine Methode m in der Klasse C, die in Bezug auf das Modularitätskonstrukt P als privat deklariert wurde, ob mindestens ein übereinstimmender Eintrag in der S-Dispatch-Tabelle vorliegt, der einer übereinstimmenden Methode der Superklasse S mit demselben Namen wie die Methode m entspricht;
einen Mechanismus zum Bestimmen als Reaktion auf eine Bestimmung, dass mindestens ein übereinstimmender Eintrag in der S-Dispatch-Tabelle vorliegt, ob der mindestens eine übereinstimmende Eintrag, der einen Codezeiger umfasst, der auf eine Menge von Code zeigt, als öffentlich deklariert ist; und
einen Mechanismus, der als Reaktion auf eine Bestimmung, dass der mindestens eine übereinstimmende Eintrag als öffentlich deklariert ist, einen entsprechenden Eintrag in der C-Dispatch-Tabelle, der dem mindestens einen übereinstimmenden Eintrag in der S-Dispatch-Tabelle entspricht, aktualisiert durch Speichern eines neuen Codezeigers, der auf eine andere Menge von Code zeigt, in dem entsprechenden Eintrag der C-Dispatch-Tabelle, um dadurch der Klasse C zu ermöglichen, eine andere Implementierung für die Methode m als die durch die Superklasse S bereitgestellte bereitzustellen, um den entsprechenden Eintrag in der C-Dispatch-Tabelle als öffentlich zu deklarieren.

12. Vorrichtung nach Anspruch 11, ferner umfassend:
einen Mechanismus zum Bestimmen als Reaktion auf eine Bestimmung, dass mindestens ein übereinstimmender Eintrag in der S-Dispatch-Tabelle vorliegt, ob irgendeiner der übereinstimmenden Einträge in Bezug auf das Modularitätskonstrukt P als privat deklariert ist;
einen Mechanismus, der als Reaktion auf eine Bestimmung, dass irgendeiner der übereinstimmenden Einträge in Bezug auf das Modularitätskonstrukt P als privat deklariert ist, einen der übereinstimmenden Einträge, der in Bezug auf das Modularitätskonstrukt P als privat deklariert wurde, auswählt, ein ausgewählter übereinstimmender Eintrag zu sein, wobei der ausgewählte übereinstimmende Eintrag einen zweiten Codezeiger umfasst, der auf eine zweite Menge von Code zeigt; und
einen Mechanismus zum Aktualisieren eines zweiten entsprechenden Eintrags in der C-Dispatch-Tabelle, der dem ausgewählten übereinstimmenden Eintrag in der S-Dispatch-Tabelle entspricht, durch Speichern des neuen Codezeigers, der auf die andere Menge von Code zeigt, in dem zweiten entsprechenden Eintrag der C-Dispatch-Tabelle, um dadurch der Klasse C zu ermöglichen, eine andere Implementierung für die Methode m als die durch die Superklasse S bereitgestellte bereitzustellen.

13. Vorrichtung nach Anspruch 11, ferner umfassend:
einen Mechanismus zum Bestimmen als Reaktion auf eine Bestimmung, dass mindestens ein übereinstimmender Eintrag in der S-Dispatch-Tabelle vorliegt, ob irgendeiner der übereinstimmenden Einträge in Bezug auf das Modularitätskonstrukt P als privat deklariert ist;
einen Mechanismus, der als Reaktion auf eine Bestimmung, dass keiner der übereinstimmenden Einträge in Bezug auf das Modularitätskonstrukt P als privat deklariert ist, einen neuen Eintrag in der C-Dispatch-Tabelle vergibt; und
einen Mechanismus zum Aktualisieren des neuen Eintrags durch Deklarieren des neuen Eintrags in Bezug auf das Modularitätskonstrukt P als privat und Speichern des neuen Codezeigers in dem neuen Eintrag.

## Revendications

1. Procédé mis en ouvre par ordinateur pour construire une table de répartition pour une classe C, dans lequel la classe C se trouve dans un construit de modularité P et comprend une superclasse S, une table de répartition S étant associée à ladite superclasse S, ledit procédé consistant à :
- répliquer la table de répartition S afin de dériver une table de répartition C pour la classe C ;
- pour un procédé m dans la classe C qui a été déclaré comme étant public, déterminer s'il y a au moins une entrée correspondante dans la table de répartition S qui correspond à un procédé correspondant de superclasse S ayant le même nom que le procédé m ;
- après avoir déterminé qu'il y a au moins une entrée correspondante dans la table de répartition S, déterminer si ladite au moins une entrée correspondante, qui comprend un pointeur de code qui pointe vers un ensemble de codes, est déclarée comme étant privée pour un construit de modularité P ; et
- après avoir déterminé que ladite au moins une entrée correspondante est déclarée comme étant privée pour le construit de modularité P, mettre à jour une entrée correspondante dans ladite table de répartition C qui correspond à l'au moins une entrée correspondante dans la table de répartition S afin de déclarer ladite entrée correspondante dans ladite table de répartition C comme étant publique, la mise à jour de ladite entrée correspondante dans ladite table de répartition C consistant à stocker dans ladite entrée correspondante de ladite table de répartition C un nouveau pointeur de code qui pointe vers un ensemble de codes différent, permettant ainsi à ladite classe C de fournir une mise en ouvre pour ledit procédé m différente de celle fournie par la superclasse S.

2. Procédé selon la revendication 1, consistant en outre à :
- après avoir déterminé qu'il y a au moins une entrée correspondante dans la table de répartition S, déterminer si l'une quelconque des entrées correspondantes est déclarée comme étant publique ;
- après avoir déterminé qu'une quelconque des entrées correspondantes est déclarée comme étant publique, choisir l'une des entrées correspondantes qui a été déclarée comme étant publique pour qu'elle devienne une entrée correspondante choisie, l'entrée correspondante choisie comprenant un pointeur de code qui pointe vers un ensemble de codes ; et
- mettre à jour une seconde entrée correspondante dans ladite table de répartition C qui correspond à l'entrée correspondante choisie dans la table de répartition S, en stockant dans ladite seconde entrée correspondante de ladite table de répartition C un nouveau pointeur de code qui pointe vers un ensemble de codes différent, permettant ainsi à ladite classe C de fournir une mise en oeuvre pour ledit procédé m différente de celle fournie par la superclasse S.

3. Procédé selon la revendication 1, consistant en outre à :
- après avoir déterminé qu'il y a au moins une entrée correspondante dans la table de répartition S, déterminer si l'une quelconque des entrées correspondantes est déclarée comme étant publique ;
- après avoir déterminé qu'aucune des entrées correspondantes n'est déclarée comme étant publique, attribuer une nouvelle entrée dans ladite table de répartition C ; et
- mettre à jour ladite nouvelle entrée en déclarant ladite nouvelle entrée comme étant publique, et en stockant un nouveau pointeur de code dans ladite nouvelle entrée.

4. Procédé selon l'une quelconque des revendications précédentes, consistant en outre à :
- pour un procédé m dans la classe C qui a été déclaré comme étant privé pour un construit de modularité P, déterminer s'il y a au moins un entrée correspondante dans la table de répartition S qui correspond à un procédé correspondant de la superclasse S ayant le même nom que le procédé m ;
- après avoir déterminé qu'il y a au moins une entrée correspondante dans la table de répartition S, déterminer si ladite au moins une entrée correspondante, qui comprend un pointeur de code qui pointe vers un ensemble de codes, est déclarée comme étant publique ; et
- après avoir déterminé que ladite au moins une entrée correspondante est déclarée comme étant publique, mettre à jour une entrée correspondante dans ladite table de répartition C qui correspond à ladite au moins une entrée correspondante dans la table de répartition S afin de déclarer ladite entrée correspondante dans ladite table de répartition C comme étant publique, la mise à jour de ladite entrée correspondante dans ladite table de répartition C consistant à stocker dans ladite entrée correspondante de ladite table de répartition C un nouveau pointeur de code qui pointe vers un ensemble de codes différent, permettant ainsi à ladite classe C de fournir une mise en oeuvre pour ledit procédé m différente de celle fournie par la superclasse S.

5. Procédé selon la revendication 4, consistant en outre à :
- après avoir déterminé qu'il y a au moins une entrée correspondante dans la table de répartition S, déterminer si l'une quelconque des entrées correspondantes est déclarée comme étant privée pour le construit de modularité P ;
- après avoir déterminé qu'une quelconque des entrées correspondantes est déclarée comme étant privée pour le construit de modularité P, choisir l'une des entrées correspondantes qui a été déclarée comme étant privée pour le construit de modularité P pour qu'elle devienne une entrée correspondante choisie, l'entrée correspondante choisie comprenant un second pointeur de code qui pointe vers un second ensemble de codes ; et
- mettre à jour une seconde entrée correspondante dans ladite table de répartition C qui correspond à l'entrée correspondante choisie dans la table de répartition S en stockant dans ladite seconde entrée correspondante de ladite table de répartition C ledit nouveau pointeur de code qui pointe vers ledit ensemble de codes différent, permettant ainsi à la classe C de fournir une mise en oeuvre pour ledit procédé m différente de celle fournie par la superclasse S.

6. Procédé selon la revendication 4, consistant en outre à :
- après avoir déterminé qu'il y a au moins une entrée correspondante dans la table de répartition S, déterminer si l'une quelconque des entrées correspondantes est déclarée comme étant privée pour le construit de modularité P ;
- après avoir déterminé qu'aucune des entrées correspondantes n'est déclarée comme étant privée pour le construit de modularité P, attribuer une nouvelle entrée dans ladite table de répartition C ; et
- mettre à jour ladite nouvelle entrée en déclarant ladite nouvelle entrée comme étant privée pour le construit de modularité P, et stocker ledit nouveau pointeur de code dans ladite nouvelle entrée.

7. Support lisible par ordinateur sur lequel sont stockées des instructions qui, lorsqu'elles sont exécutées par un ou plusieurs processeurs, amènent ledit ou lesdits processeurs à exécuter le procédé selon l'une quelconque des revendications précédentes.

8. Appareil pour construire une table de répartition pour une classe C, dans lequel la classe C se trouve dans un construit de modularité P et comprend une superclasse S à laquelle est associée une table de répartition S, ledit appareil comprenant :
- un mécanisme pour répliquer la table de répartition S afin de dériver une table de répartition C pour la classe C ;
- un mécanisme pour déterminer, pour un procédé m dans la classe C qui a été déclaré comme étant publique, s'il y a au moins une entrée correspondante dans la table de répartition S qui correspond à un procédé correspondant de superclasse S ayant le même nom que le procédé m ;
- un mécanisme pour déterminer, après avoir déterminé qu'il y a au moins une entrée correspondante dans la table de répartition S, si ladite au moins une entrée correspondante, qui comprend un pointeur de code qui pointe vers un ensemble de codes, est déclarée comme étant privée pour un construit de modularité P ; et
- un mécanisme pour mettre à jour, après avoir déterminé que ladite au moins une entrée correspondante est déclarée comme étant privée pour le construit de modularité P, une entrée correspondante dans ladite table de répartition C qui correspond à l'au moins une entrée correspondante dans la table de répartition S afin de déclarer ladite entrée correspondante dans la table de répartition C comme étant publique, la mise à jour de ladite entrée correspondante dans ladite table de répartition C consistant à stocker dans ladite entrée correspondante de ladite table de répartition C un nouveau pointeur de code qui pointe vers un ensemble de codes différent, permettant ainsi à ladite classe C de fournir une mise en oeuvre pour ledit procédé m différente de celle fournie par la superclasse S.

9. Appareil selon la revendication 8, comprenant en outre :
- un mécanisme pour déterminer, après avoir déterminé qu'il y a au moins une entrée correspondante dans la table de répartition S, si l'une quelconque des entrées correspondantes est déclarée comme étant publique ;
- un mécanisme pour choisir, après avoir déterminé qu'une quelconque des entrées correspondantes est déclarée comme étant publique, l'une des entrées correspondantes qui a été déclarée comme étant publique pour qu'elle devienne une entrée correspondante choisie, l'entrée correspondante choisie comprenant un pointeur de code qui pointe vers un ensemble de codes ; et
- un mécanisme pour mettre à jour une seconde entrée correspondante dans ladite table de répartition C qui correspond à l'entrée correspondante choisie dans la table de répartition S, en stockant dans ladite seconde entrée correspondante de ladite table de répartition C un nouveau pointeur de code qui pointe vers un ensemble de codes différent, permettant ainsi à ladite classe C de fournir une mise en oeuvre pour ledit procédé m différente de celle fournie par la superclasse S.

10. Appareil selon la revendication 8, comprenant en outre :
- un mécanisme pour déterminer, après avoir déterminé qu'il y a au moins une entrée correspondante dans la table de répartition S, si l'une quelconque des entrées correspondantes est déclarée comme étant publique ;
- un mécanisme pour attribuer, après avoir déterminé qu'aucune des entrées correspondantes n'est déclarée comme étant publique, une nouvelle entrée dans ladite table de répartition C ; et
- un mécanisme pour mettre à jour ladite nouvelle entrée en déclarant ladite nouvelle entrée comme étant publique, et en stockant un nouveau pointeur de code dans ladite nouvelle entrée.

11. Appareil selon l'une quelconque des revendications 8 à 10, comprenant en outre :
- un mécanisme pour déterminer, pour un procédé m dans la classe C qui a été déclaré comme étant privé pour un construit de modularité P, s'il y a au moins une entrée correspondante dans la table de répartition S qui correspond à un procédé correspondant de la superclasse S ayant le même nom que le procédé m ;
- un mécanisme pour déterminer, après avoir déterminé qu'il y a au moins une entrée correspondante dans la table de répartition S, si ladite au moins une entrée correspondante, qui comprend un pointeur de code qui pointe vers un ensemble de codes, est déclarée comme étant publique ; et
- un mécanisme pour mettre à jour, après avoir déterminé que ladite au moins une entrée correspondante est déclarée comme étant publique, une entrée correspondante dans ladite table de répartition C qui correspond à ladite au moins une entrée correspondante dans la table de répartition S en stockant dans ladite entrée correspondante de ladite table de répartition C un nouveau pointeur de code qui pointe vers un ensemble de codes différent, permettant ainsi à la classe C de fournir une mise en oeuvre pour ledit procédé m différente de celle fournie par la superclasse S, afin de déclarer ladite entrée correspondante dans ladite table de répartition C comme étant publique.

12. Appareil selon la revendication 11, comprenant en outre :
- un mécanisme pour déterminer, après avoir déterminé qu'il y a au moins une entrée correspondante dans la table de répartition S, si l'une quelconque des entrées correspondantes est déclarée comme étant privée pour le construit de modularité P ;
- un mécanisme pour choisir, après avoir déterminé qu'une quelconque des entrées correspondantes est déclarée comme étant privée pour le construit de modularité P, l'une des entrées correspondantes qui a été déclarée comme étant privée pour le construit de modularité P pour qu'elle devienne une entrée correspondante choisie, l'entrée correspondante choisie comprenant un second pointeur de code qui pointe vers un second ensemble de codes ; et
- un mécanisme pour mettre à jour une seconde entrée correspondante dans ladite table de répartition C qui correspond à l'entrée correspondante choisie dans la table de répartition S en stockant dans ladite seconde entrée correspondante de ladite table de répartition C ledit nouveau pointeur de code qui pointe vers ledit ensemble de codes différent, permettant ainsi à ladite classe C de fournir une mise en oeuvre pour ledit procédé m différente de celle fournie par la superclasse S.

13. Appareil selon la revendication 11, comprenant en outre :
- un mécanisme pour déterminer, après avoir déterminé qu'il y a au moins une entrée correspondante dans la table de répartition S, si l'une quelconque des entrées correspondantes est déclarée comme étant privée pour le construit de modularité P ;
- un mécanisme pour attribuer, après avoir déterminé qu'aucune des entrées correspondantes n'est déclarée comme étant privée pour le construit de modularité P, une nouvelle entrée dans ladite table de répartition C ; et
- un mécanisme pour mettre à jour ladite nouvelle entrée en déclarant ladite nouvelle entrée comme étant privée pour le construit de modularité P, et stocker ledit nouveau pointeur de code dans ladite nouvelle entrée.
